# EUROPEAN PATENT APPLICATION

(11) **EP 4 679 679 A1**
(43) Date of publication of application: **14.01.2026**
(21) Application number: 23926290.0
(22) Date of filing: 08.03.2023
(51) Int. Cl.: H02K 3/18, H02K 3/28

(54) **MOTOR**

(71) Applicant: KAWASAKI JUKOGYO KABUSHIKI KAISHA, Kobe-shi, Hyogo 650-8670 (JP)
(72) Inventor: SHIBAYAMA, Yoshiyasu, Kobe-shi, Hyogo 650-8670 (JP); IMAMURA, Keigo, Kobe-shi, Hyogo 650-8670 (JP); UETA, Kazuki, Kobe-shi, Hyogo 650-8670 (JP)
(74) Representative: Bals & Vogel Patentanwälte PartGmbB
(86) International application number: PCT/JP2023/008841
(87) International publication number: WO 2024/185079

(57) **Abstract**

A motor includes a stator core 31 and coils 4. Teeth 33 of the stator core 31 include a first tooth 33 through a k-th tooth 33 (where k is an even integer). The coils 4 include first coils 4 through k-th coils 4. n-th coils 4 (where n = 1 to k) are wound around an n-th tooth 33. In each of the n-th coils 4, the number of windings passing through one slot 34 adjacent to the n-th tooth 33 is larger than the number of windings passing through another slot 34 adjacent to the n-th tooth 33. The coils 4 included in the first coils 4 through the k-th coils 4 are connected one by one in series via a crossover wire 7 to repeatedly turn in ascending order from the first.

## Description

### FIELD

The technique disclosed here relates to a motor.

### BACKGROUND

Patent Document 1 discloses a motor including a stator and a rotor located inside the stator. The rotor includes magnets arranged in the circumferential direction about the rotation axis. The stator includes teeth arranged in the circumferential direction. A winding is wound around each tooth to form a coil.

### CITATION LIST

### PATENT DOCUMENT

Patent Document 1: Japanese Patent No. 5956976

### SUMMARY

A coil generates a magnetomotive force. The magnetomotive force has a circumferential distribution unique to the coil. The circumferential distribution of the magnetomotive force can affect a behavior of the motor. However, it is not easy to change the circumferential distribution of the magnetomotive force.

It is therefore an object of the technique disclosed here to achieve a desired circumferential distribution of a magnetomotive force.

### BRIEF DESCRIPTION OF THE DRAWINGS

[FIG. 1] FIG. 1 is a cross-sectional view of a motor.
[FIG. 2] FIG. 2 is a schematic view illustrating an example in which coils are wound around teeth in the same tooth group.
[FIG. 3] FIG. 3 is a schematic view for describing a winding structure.
[FIG. 4] FIG. 4 is a schematic view for describing the winding structure.
[FIG. 5] FIG. 5 is a schematic view for describing another example of the winding structure.
[FIG. 6] FIG. 6 is a schematic view for describing another example of the winding structure.
[FIG. 7] FIG. 7 is a cross-sectional view of a motor in another aspect.
[FIG. 8] FIG. 8 is a cross-sectional view of a motor in another aspect.
[FIG. 9] FIG. 9 is a schematic view for describing a winding structure.
[FIG. 10] FIG. 10 is a schematic view for describing a winding structure in another aspect.
[FIG. 11] FIG. 11 is a schematic view for describing a winding structure in another aspect.
[FIG. 12] FIG. 12 is a schematic view for describing a winding structure in another aspect.

### DESCRIPTION OF EMBODIMENTS

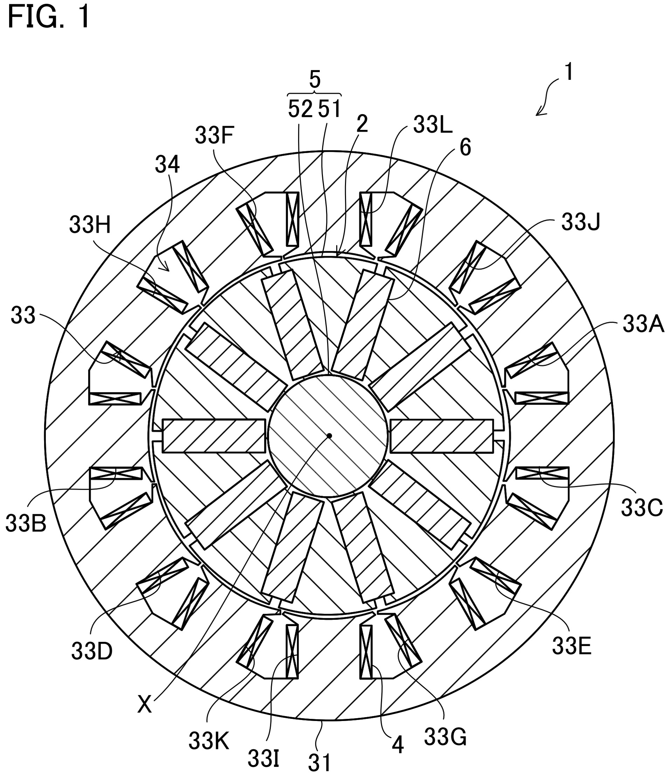

An exemplary embodiment will be described in detail hereinafter with reference to the drawings. FIG. 1 is a cross-sectional view of a motor 1.

The motor 1 includes a stator core 31 and coils 4. The motor 1 further includes a rotor 2. The motor 1 is a three-phase alternating current (AC) motor.

The stator core 31 includes teeth 33 and slots 34 alternately arranged in a circumferential direction about a predetermined rotation axis X. The coils 4 are wound around the teeth 33. Each of the slots 34 is a space between circumferentially adjacent ones of the teeth 33.

The stator core 31 is, for example, a soft magnetic material. The stator core 31 is, for example, stacked electromagnetic steel sheets. The stator core 31 has a cylindrical shape about the rotation axis X.

A direction along the rotation axis X will be hereinafter referred to as a "rotation axis direction." The circumferential direction about the rotation axis X will be simply referred to as a "circumferential direction." A radial direction about the rotation axis X will be simply referred to as a "radial direction." A side toward the rotation axis X in the radial direction will be referred to as a "radially inner side." A side opposite to the rotation axis X in the radial direction will be referred to as a "radially outer side." A cross section orthogonal to the rotation axis X will be simply referred to as an "orthogonal cross section." A shape of an orthogonal cross section of each element of the motor 1 will be simply referred to as a "cross-sectional shape."

The coils 4 include U-phase coils, V-phase coils, and W-phase coils. The coils 4 generate a rotating magnetic field that rotates the rotor 2.

The rotor 2 is located inside the stator core 31. That is, the rotor 2 is an inner rotor. The rotor 2 includes a rotor body 5 that rotates about the rotation axis X, and magnets 6 arranged in the rotor body 5.

The rotor body 5 is at least partially a soft magnetic material. The rotor body 5 includes a rotor core 51 and a shaft 52. The rotor core 51 is a soft magnetic material. The rotor core 51 is made of, for example, stacked electromagnetic steel sheets. The rotor core 51 has a ring shape surrounding the rotation axis X. Specifically, the rotor core 51 has a cylindrical shape whose center axis is the rotation axis X. The rotor core 51 is oriented such that an outer peripheral surface of the rotor core 51 faces an inner peripheral surface of a stator 3.

The shaft 52 is fitted in the rotor core 51. The shaft 52 is fixed to the rotor core 51. The shaft 52 is a soft magnetic material. The center axis of the shaft 52 coincides with the rotation axis X. The shaft 52 is rotatably supported by a motor case through a bearing or other members. The rotor core 51 rotates about the rotation axis X together with the shaft 52.

The magnets 6 are located inside the rotor core 51. That is, the motor 1 is an interior permanent magnetic (IPM) motor. In this example, the number of magnets 6 is 10.

The magnets 6 are permanent magnets such as bonded magnets or sintered magnets. The bonded magnets are resin-bonded magnets obtained by mixing magnet powder with a binder and solidifying and molding the mixture. Examples of the magnet powder include powders of magnets such as a neodymium magnet, a samarium iron nitrogen-based magnet, a samarium cobalt-based magnet, a ferrite magnet, and an alnico magnet, and a mixture of two or more of these powders. Examples of the binder include thermosetting resins such as an epoxy resin, thermoplastic resins such as a polyamide resin, and rubber. The sintered magnets are magnets produced by a so-called powder metallurgy technique. Examples of the sintered magnets include neodymium magnets, samarium cobalt-based magnets, and ferrite magnets.

Each of the magnets 6 has a plate shape. Each magnet 6 has a longitudinal direction, a width direction, and a thickness direction that are orthogonal to one another. In this example of the magnets 6, the longitudinal direction substantially coincides with the rotation axis direction, the width direction substantially coincides with the radial direction, and the thickness direction substantially coincides with a direction orthogonal to both the rotation axis direction and the radial direction. The cross-sectional shape of the magnet 6 orthogonal to the longitudinal direction is a substantially rectangle.

The magnets 6 are arranged at regular intervals in the circumferential direction. Specifically, in an orthogonal cross section, the magnets 6 are arranged radially (i.e., in a spoke shape) about the rotation axis X.

The magnets 6 are magnetized in the thickness direction. In each of the magnets 6, one of the two opposed surfaces in the thickness direction serves as a south pole. The other surface serves as a north pole. In circumferentially adjacent two of the magnets 6, opposed surfaces serve as the same pole of the south pole or the north pole. The thus-arranged magnets 6 alternately constitute different magnetic poles in the circumferential direction in the rotor body 5.

Next, the teeth 33 and the coils 4 will be described in detail.

### =A Pair of Tooth Group and Coil Group=

First, a pair of a tooth group and a coil group included in the stator core 31 will be described. The teeth 33 are divided into tooth groups. Specifically, the teeth 33 include a first tooth group TG1 including a first tooth 33 through a k-th tooth 33 (where k is an even integer).

The coils 4 are divided into coil groups. Specifically, the coils 4 include a first coil group CG1 including first coils 4 through k-th coils 4. The first coils 4 through the k-th coils 4 are in the same shape (e.g., U phase). The n-th coils 4 (where n = 1 to k) are wound around the n-th tooth 33. It should be noted that n is any integer of 1 to k, and substituted by all the numbers from 1 to k. That is, each of the coils 4 included in the first coil group CG1 is wound around the tooth 33 having the same ordinal number among the teeth 33 included in the first tooth group TG1.

### -Coils on Tooth-

Multiple coils 4 are wound around one tooth 33. A winding continuously wound around the outer peripheral surface of the tooth 33 is defined as a coil 4. That is, in the n-th tooth 33, a winding is continuously wound around the outer peripheral surface of the n-th tooth 33, and then a winding is separated from the outer peripheral surface, returns to the outer peripheral surface again, and is continuously wound around the outer peripheral surface. The winding wound before the winding is separated from the outer peripheral surface and the winding wound again after the winding is separated from the outer peripheral surface are regarded as different n-th coils 4. That is, lead wires other than windings wound around the outer peripheral surface of the n-th tooth 33 are interposed between the n-th coils 4.

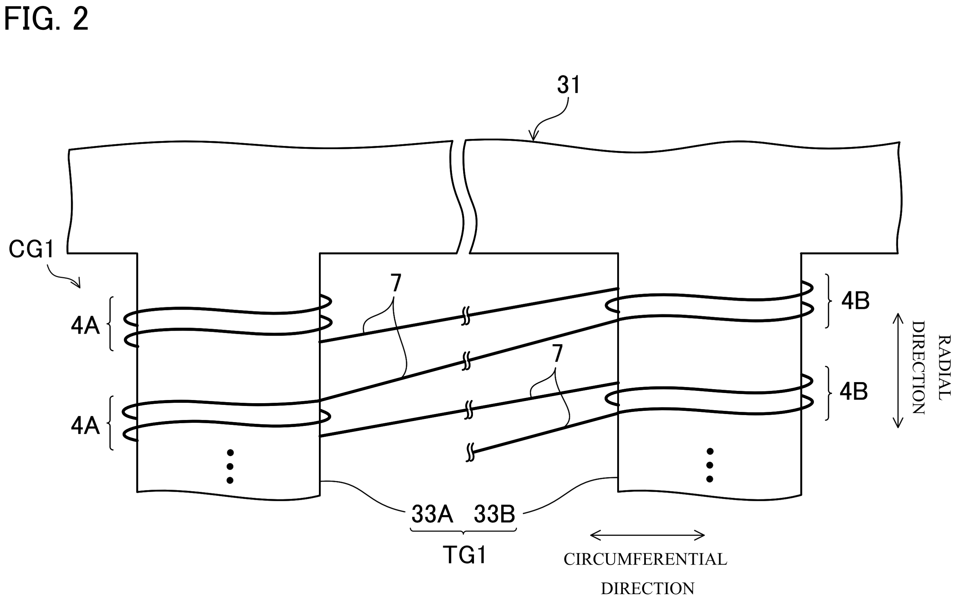

With reference to FIG. 2, an example of the winding structure of the coils 4 in the case of k = 2 will be specifically described. FIG. 2 is a schematic view for describing a winding structure in the first coil group CG1, where the teeth 33 are seen in the rotation axis direction. In FIG. 2, the left-right direction on the paper corresponds to the circumferential direction. In FIG. 2, for easy understanding of the drawing, the number of turns of each coil 4 is two, and the coils 4 wound around the same tooth 33 are illustrated with an interval therebetween. The first tooth group TG1 includes a first tooth 33A and a second tooth 33B. The first coil group CG1 includes first coils 4A and second coils 4B. Regarding the coil 4, an alphabet after the reference numeral "4" corresponds to the original ordinal number of the coil 4. Similarly, regarding the tooth 33, an alphabet after the reference numeral "33" corresponds to the ordinal number of the tooth 33.

The first coils 4A are wound around the first tooth 33A. The second coils 4B are wound around the second tooth 33B. In FIG. 2, two first coils 4A are wound around the first tooth 33A. The two second coils 4B are also wound around the second tooth 33B. The first coils 4A and the second coils 4B are in the same phase (e.g., U phase). The first coils 4A and the second coils 4B are formed of a single continuous winding.

The two first coils 4A are not continuously wound around the first tooth 33A. The winding constituting one of the first coils 4A is separated from the first tooth 33A as a crossover wire 7. Another first coil 4A is constituted by a winding that has returned to the first tooth 33A as the crossover wire 7. The winding constituting another first coils 4A extends to be separated from the first tooth 33A as the crossover wire 7 again. In this manner, the first coils 4A are intermittently wound around the first tooth 33A. The first coils 4A may be wound around the first tooth 33A while being stacked. Similarly, the second coils 4B are also intermittently wound around the second tooth 33B with the crossover wires 7 interposed therebetween.

### -Connection of Coils in Coil Group-

Regarding connection of the coils 4 included in the coil group, coils included in the first coils 4 through the k-th coils 4 are connected one by one in series via the crossover wire 7 to repeatedly turn in ascending order from the first. The crossover wire 7 is a lead wire connecting the coils 4 wound around different teeth 33. In this example, the coils 4 are connected by one crossover wire 7. However, the present disclosure is not limited to this example, and two crossover wires 7 may be coupled to the coils 4. That is, in an alternative example, two crossover wires 7 are separated during fabrication of the motor 1, and in a completion state of the motor 1, the two crossover wires 7 are coupled to each other. The k-th coils 4 are connected to the first coils 4 via the crossover wire 7. The number of repetitions of this turn will be hereinafter referred to as the "number of turns," and the direction of this turn will be simply referred to as a "turning direction." The first coils 4 through the k-th coils 4 are formed of one continuous lead wire.

Here, connection of the coils 4 included in the coil group will be specifically described with reference to FIG. 2 showing an example of k = 2. The first coil group CG1 includes the first coils 4A and the second coils 4B. One of the first coils 4A is connected to the second coils 4B via the crossover wire 7. In the first coil group CG1, the coils 4 do not include an ordinal number larger than the second, and thus, the second coils 4B are connected to other first coils 4A via the crossover wire 7. In this manner, in the first coil group CG1, the first coils 4A and the second coils 4B are alternately connected via the crossover wire 7.

### -Winding Non-uniformity in Coils-

Further, in the coils 4, the numbers of windings passing through the two slots 34 adjacent to the tooth 33 around which the coils 4 are wound are different. The winding passing through one slot 34 adjacent to the n-th tooth refers to a portion of the windings of the n-th coils located in this slot 34. That is, in each of the n-th coils, the number of windings passing through one of the slots 34 adjacent to the n-th tooth (hereinafter referred to simply as "one slot 34") is larger than the number of windings passing through the other slot 34 adjacent to the n-th tooth (hereinafter referred to simply as the "other slot 34"). The coils 4 in the first coils 4 through the k-th coils 4 are wound around the corresponding tooth 33, and sequentially pass through two slots 34 adjacent to the corresponding tooth 33. At this time, the number of windings passing through the one slot 34 and the number of windings passing through the other slot 34 are not equal, and are non-uniform. For example, in a case where the winding starts being wound around the tooth 33 to pass through one slot 34, and is wound multiple times around the tooth 33, and then finishes being wound through the other slot 34, the number of windings passing through one slot 34 is equal to the number of windings passing through the other slot 34. However, in a case where the winding starts being wound around the tooth 33 to pass through one slot 34 and finishes being wound through the same slot 34, the number of windings passing through the one slot 34 is larger than the number of windings passing through the other slot 34 by one.

Since in each of the coils 4 wound around one tooth 33, the number of windings passing through one slot 34 is larger than the number of windings passing through the other slot 34 by one, the difference between the number of windings passing through the one slot 34 and the number of windings passing through the other slot 34 increases in accordance with the number of coils 4 on the entire tooth 33. For example, in a case where 10 coils 4 are wound around one tooth 33, the number of windings passing through one slot 34 is larger than the number of windings passing through the other slot 34 by 10. The number of coils 4 on each tooth 33 increases in accordance with the number of turns. That is, in each tooth, the difference between the number of windings passing through the one slot 34 and the number of windings passing through the other slot 34 increases in accordance with the number of turns.

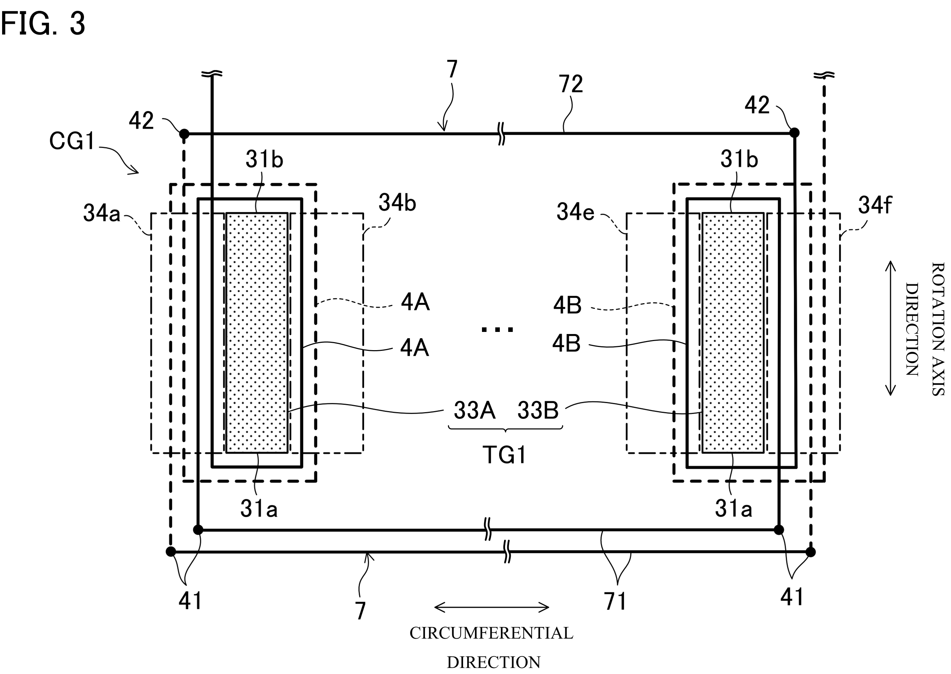

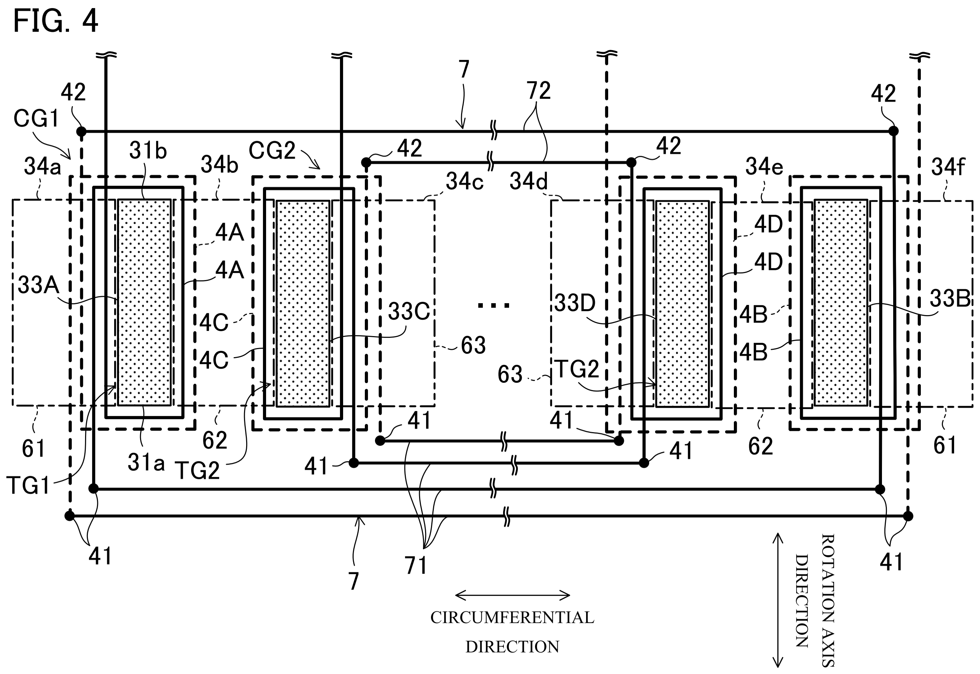

With reference to the example of k = 2, the winding structure of the coils 4 will be specifically described. FIG. 3 is a schematic view for describing a winding structure in the first coil group CG1, and is a development view of the teeth when seen from the radially inner side. FIG. 3 shows an example of the first tooth group TG1 and the first coil group CG1 in the case of k = 2. In FIG. 3, the left-right direction on the paper corresponds to the circumferential direction. In FIG. 3, for easy understanding of the drawing, the number of turns of each coil 4 is one so that the windings do not overlap each other. In FIG. 3, for convenience of description, the slots 34 are indicated by chain double-dashed lines, the teeth 33 are marked with dots, and two coils wound around one tooth are distinguished by using a solid line and a broken line. The same holds for FIGS. 4, 5, 6, 9, 10, 11, and 12.

In each of the first coils 4A, the number of windings passing through one slot 34a adjacent to the first tooth 33A is larger than the number of windings passing through the other slot 34b adjacent to the first tooth 33A. Specifically, in each first coil 4A, the number of windings passing through the one slot 34a adjacent to the first tooth 33A is two, and the number of windings passing through the other slot 34b adjacent to the first tooth 33A is one. In FIG. 3, since the two first coils 4A are wound around the first tooth 33A, the number of windings passing through the one slot 34a is larger than the number of windings passing through the other slot 34b by two in total.

Similarly, in each of the second coils 4B, the number of windings passing through one slot 34f adjacent to the second tooth 33B is larger than the number of windings passing through the other slot 34e adjacent to the second tooth 33B. Specifically, in each second coil 4B, the number of windings passing through the one slot 34f adjacent to the second tooth 33B is two, and the number of windings passing through the other slot 34e adjacent to the second tooth 33B is one. In FIG. 3, since the two second coils 4B are wound around the second tooth 33B, the number of windings passing through the one slot 34f is larger than the number of windings passing through the other slot 34e by two in total.

### -Connection between Coils and Crossover Wire-

Connection between the coils 4 and the crossover wire 7 will now be described. Each n-th coil has a first end 41 that is one end, and a second end 42 that is the other end. The stator core 31 includes a first end surface 31a that is one end surface in the rotation axis direction, and a second end surface 31b that is the other end surface in the rotation axis direction. The first end 41 of the n-th coil is located on the side of the first end surface 31a of the stator core 31 in the rotation axis direction. The second end 42 of the n-th coil is located on the side of the second end surface 31b of the stator core 31 in the rotation axis direction.

The first end 41 of each n-th coil is connected to one of the windings passing through one slot 34 adjacent to the n-th tooth. The second end 42 of the n-th coil is connected to another of the windings passing through the one slot 34 adjacent to the n-th tooth. The first end 41 of the n-th coil may be directly connected to the one winding, or may be indirectly connected to the one winding via a lead wire continuous to the one winding. Similarly, the second end 42 of the n-th coil may be directly connected to the other winding, or may be indirectly connected to the other winding via a lead wire continuous to the other winding.

In this manner, each n-th coil is wound around the n-th tooth such that the first end 41 and the second end 42 are drawn out from the same slot 34 in the two slots 34 adjacent to the n-th tooth. That is, since the slots 34 are narrow and the winding are densely arranged, the ends of the coils 4 are drawn out from the stator core 31 in the rotation axis direction. In a case where the start end and the terminal end of one coil 4 are drawn out to the same end surface of the stator core 31, the winding starts being wound to pass through one slot 34 and finishes being wound to pass through the other slot 34. In this case, the number of windings passing through the one slot 34 is equal to the number of windings passing through the other slot 34. However, in a case where the start end and the terminal end of one coil 4 are drawn out to different end surfaces of the stator core 31, the winding starts being wound to pass through the one slot 34 and finishes being wound to pass through the same slot 34. As a result, the number of windings passing through the one slot 34 is larger than the number of windings passing through the other slot 34 by one.

The crossover wire 7 includes a first crossover wire 71 located on the side of the first end surface 31a with respect to the stator core 31 in the rotation axis direction, and a second crossover wire 72 located on the side of the second end surface 31b with respect to the stator core 31 in the rotation axis direction. The first crossover wire 71 extends along the first end surface 31a. The second crossover wire 72 extends along the second end surface 31b.

The first crossover wire 71 connects the first end 41 of an odd-numbered coil 4 (i.e., coil 4 having an odd ordinal number) to the first end 41 of an even-numbered coil 4 (i.e., coil 4 having an even ordinal numbers) among the first coils 4 through the k-th coils 4. The second crossover wire 72 connects the second end 42 of an even-numbered coil 4 to the second end 42 of an odd-numbered coil 4 among the first coils 4 through the k-th coils 4.

As described above, the first end 41 of each n-th coil 4 is drawn out toward the first end surface 31a of the stator core 31, and the second end 42 is drawn out toward the second end surface 31b of the stator core 31. By connecting the first coils 4 through the k-th coils 4 in the order of ordinal numbers via the first crossover wire 71 and the second crossover wire 72 alternately, the coils 4 whose first ends 41 and second ends 42 are drawn out to the first end surface 31a and the second end surface 31b, respectively, can be connected continuously in the order of ordinal numbers.

Here, connection between the coils 4 and the crossover wire 7 will be specifically described with reference to FIG. 3 showing an example of k = 2.

The first end 41 and the second end 42 of each first coil 4A are drawn out from the stator core 31 in the rotation axis direction. The first end 41 and the second end 42 of each second coil 4B are drawn out from the stator core 31 in the rotation axis direction.

Specifically, the first end 41 of each first coil 4A is connected to one of the windings passing through the one slot 34a adjacent to the first tooth 33A. The first end 41 of the first coil 4A is located on the side of the first end surface 31a with respect to the stator core 31 in the rotation axis direction. The second end 42 of each first coil 4A is connected to another of the windings passing through the one slot 34a adjacent to the first tooth 33A. The second end 42 of the first coil 4A is located on the side of the second end surface 31b with respect to the stator core 31 in the rotation axis direction.

Similarly, the first end 41 of each second coil 4B is connected to one of the windings passing through the one slot 34f adjacent to the second tooth 33B. The first end 41 of the second coil 4B is located on the side of the first end surface 31a with respect to the stator core 31 in the rotation axis direction. The second end 42 of each second coil 4B is connected to another of the windings passing through the one slot 34f adjacent to the second tooth 33B. The second end 42 of the second coil 4B is located on the side of the second end surface 31b with respect to the stator core 31 in the rotation axis direction.

The first crossover wire 71 is located on the side of the first end surface 31a with respect to the stator core 31 in the rotation axis direction. The second crossover wire 72 is located on the side of the second end surface 31b with respect to the stator core 31 in the rotation axis direction. The first crossover wire 71 connects the first end 41 of each first coil 4A to the first end 41 of the corresponding second coil 4B. The second crossover wire 72 connects the second end 42 of each second coil 4B to the second end 42 of the corresponding first coil 4A.

In the manner described above, since the first coil group CG1 includes two types of coils 4 of the first coils 4A and the second coils 4B, the first coils 4A and the second coils 4B are alternately connected one by one, and the first crossover wire 71 and the second crossover wire 72 are alternately used for the connection. In the case of connecting the first coils 4A and the second coils 4B in this order in the turning direction, the first crossover wire 71 is used. In the case of connecting the second coils 4B and the first coils 4A in this order in the turning direction, the second crossover wire 72 is used.

In the thus-configured stator core 31, a circumferential distribution of a magnetomotive force by the coils 4 can be adjusted. Specifically, a magnetomotive force by the coils 4 is affected by the surrounding environment or other surrounding coils 4, and thus, a circumferential distribution of the magnetomotive force becomes non-uniform, and a steep peak might occur. When a steep peak occurs, a harmonic component of the magnetomotive force increases. The harmonic component of the magnetomotive force might increase torque ripples and/or demagnetize magnets of the rotor. However, in the coils 4, since the number of windings passing through one slot 34 of the two slots 34 adjacent to the corresponding tooth 33 is larger than the number of windings passing through the other slot 34, a magnetomotive force is high around the large number of windings. This makes it possible to shift a peak position in a circumferential distribution of a magnetomotive force by the coils 4 to a side where the number of windings is larger. Consequently, the peak of the magnetomotive force can be made gentle, and torque ripples, demagnetization, or the like can be reduced. In this manner, in the stator core 31, a desired circumferential distribution of a magnetomotive force can be achieved.

The first crossover wire 71 is located on the side of the first end surface 31a of the stator core 31, and the second crossover wire 72 is located on the side of the second end surface 31b of the stator core 31. The first crossover wire 71 connects the first ends 41 of the first coils 4A to the first ends 41 of the second coils 4B. The second crossover wire 72 connects the second ends 42 of the second coils 4B to the second ends 42 of the first coils 4A. This simplifies routing of the crossover wire 7, and facilitates the configuration in which the number of windings is different between the two adjacent slots 34.

The first end 41 of each first coil 4A is connected to one of the windings passing through one slot 34 adjacent to the first tooth 33A. The second end 42 of each first coil 4A is connected to another of the windings passing through the one slot 34 adjacent to the first tooth 33A. The first end 41 of each second coil 4B is connected to one of the windings passing through one slot 34 adjacent to the second tooth 33B. The second end 42 of each second coil 4B is connected to another of the windings passing through the one slot 34 adjacent to the second tooth 33B. This facilitates the configuration in which the number of windings is different between the two adjacent slots 34. If both the first end 41 and the second end 42 of each first coil 4A are located on the side of the first end surface 31a of the stator core 31, the first end 41 of the first coil 4A is connected to one of the windings passing through one slot 34 adjacent to the first tooth 33A, and the second end 42 of the first coil 4A is connected to one of the windings passing through the other slot 34 adjacent to the first tooth 33A, the number of windings is the same between the two adjacent slots 34.

### =Two Pairs of Tooth Groups and Coil Groups=

Two pairs of tooth groups and coil groups included in the stator core 31 will now be described.

The teeth 33 further include a second tooth group TG2 including a (k+1)th tooth 33 through a (2k)th tooth 33.

The coils 4 further include a second coil group CG2 including (k+1)th coils 4 through (2k)th coils 4. The second coil group CG2 is in the same phase (e.g., U phase) as the first coil group CG1. That is, all the first coils 4 through the (2k)th coils 4 are in the same phase. The (n+k)th coils 4 are wound around the (n+k)th tooth 33. That is, each of the coils 4 included in the second coil group CG2 is wound around the tooth 33 having the same ordinal number in the teeth 33 included in the second tooth group TG2. Since n = 1 to k, n + k = 1 + k to 2k. The n-th tooth 33 is adjacent to the (n+k)th tooth 33.

### -Coils on Tooth-

In the second tooth group TG2, multiple coils 4 are also wound around one tooth 33. A winding continuously wound around the outer peripheral surface of the tooth 33 is defined as a coil 4.

An example of the winding structure of the coils 4 in the case of k = 2 will now be specifically described. FIG. 4 is a schematic view for describing winding structures in the first coil group CG1 and the second coil group CG2, and is a development view of the teeth when seen from the radially inner side.

The structures of the first tooth group TG1 and the first coil group CG1 are similar to those shown in FIG. 2. Basic structures of the second tooth group TG2 and the second coil group CG2 are similar to those of the first tooth group TG1 and the first coil group CG1. The second tooth group TG2 includes a third tooth 33C and a fourth tooth 33D. The first tooth 33A and the third tooth 33C are adjacent to each other. The second tooth 33B and the fourth tooth 33D are adjacent to each other. The second coil group CG2 includes third coils 4C and fourth coils 4D.

The third coils 4C are wound around the third tooth 33C. The fourth coils 4D are wound around the fourth tooth 33D. In FIG. 4, two third coils 4C are wound around the third tooth 33C. Two fourth coils 4D are also wound around the fourth tooth 33D. The third coils 4C and the fourth coils 4D are in the same phase (e.g., U phase) as the first coils 4A and the second coils 4B. The third coils 4C and the fourth coils 4D are formed of a single continuous lead wire.

The two third coils 4C are intermittently wound around the third tooth 33C with the crossover wires 7 interposed therebetween. Similarly, the two fourth coils 4D are intermittently wound around the second tooth 33B with the crossover wires 7 interposed therebetween.

### -Winding Non-uniformity in Coils-

In a manner similar to the first coil group CG1, the numbers of windings passing through two slots 34 adjacent to the tooth 33 around which the coils 4 are wound are also different in the second coil group CG2. That is, in each of the (n+k)th coils 4, the number of windings passing through one slot 34 adjacent to the (n+k)th tooth 33 is larger than the number of windings passing through the other slot 34 adjacent to the (n+k)th tooth 33. That is, coils 4 in the (k+1)th coils 4 through the (2k)th coils 4 are wound around the corresponding tooth 33, and sequentially pass through two slots 34 adjacent to the corresponding tooth 33. At this time, the number of windings passing through one slot 34 and the number of windings passing through the other slot 34 are not equal, and are non-uniform. In a manner similar to the first coil group CG1, since the winding of each coil 4 starts being wound around the tooth 33 to pass through one slot 34 and finishes being wound through the same slot 34, the number of windings passing through the one slot 34 is larger than the number of windings passing through the other slot 34 by one.

With reference to FIG. 4 showing the case of k = 2, an example of the winding structure in the second coil group CG2 will be specifically described.

In each of the third coils 4C, the number of windings passing through one slot 34c adjacent to the third tooth 33C is larger than the number of windings passing through the other slot 34b adjacent to the third tooth 33C. Specifically, in each third coil 4C, the number of windings passing through the one slot 34c adjacent to the third tooth 33C is two, and the number of windings passing through the other slot 34b adjacent to the third tooth 33C is one. In FIG. 4, since the two third coils 4C are wound around the third tooth 33C, the number of windings passing through the one slot 34c is larger than the number of windings passing through the other slot 34b by two in total.

Similarly, in each of the fourth coils 4D, the number of windings passing through one slot 34f adjacent to the fourth tooth 33D is larger than the number of windings passing through the other slot 34e adjacent to the fourth tooth 33D. Specifically, in each fourth coil 4D, the number of windings passing through the one slot 34f adjacent to the fourth tooth 33D is two, and the number of windings passing through the other slot 34e adjacent to the fourth tooth 33D is one. In FIG. 4, since the two fourth coils 4D are wound around the fourth tooth 33D, the number of windings passing through the one slot 34f is larger than the number of windings passing through the other slot 34e by two in total.

### -Connection of Coils in Second Coil Group-

Regarding connection of the coils 4 included in the second coil group CG2, coils 4 included in the (k+1)th coils 4 through the (2k)th coils 4 are connected one by one in series via the crossover wires 7 to repeatedly turn in ascending order from the (k+1)th. The (2k)th coils 4 are connected to the (k+1)th coils 4 via the crossover wire 7. The (k+1)th coils 4 through the (2k)th coils 4 are formed of one continuous lead wire.

Here, connection of the coils 4 included in the second coil group CG2 will be specifically described with reference to FIG. 4 showing an example of k = 2. In the second coil group CG2, one of the third coils 4C is connected to the fourth coils 4D via the crossover wire 7. In the second coil group CG2, the coils 4 do not include an ordinal number larger than the fourth, and thus, the fourth coils 4D are connected to other third coils 4C via the crossover wire 7. In this manner, in the second coil group CG2, the third coils 4C and the fourth coils 4D are alternately connected via the crossover wires 7.

More specifically, the first end 41 and the second end 42 of each third coil 4C are drawn out from the stator core 31 in the rotation axis direction. The first end 41 and the second end 42 of each fourth coil 4D are drawn out from the stator core 31 in the rotation axis direction.

The first end 41 of each third coil 4C is connected to one of the windings passing through the one slot 34c adjacent to the third tooth 33C. The first end 41 of the third coil 4C is located on the side of the first end surface 31a with respect to the stator core 31 in the rotation axis direction. The second end 42 of each third coil 4C is connected to another of the windings passing through the one slot 34c adjacent to the first tooth 33A. The second end 42 of the third coil 4C is located on the side of the second end surface 31b of the stator core 31 in the rotation axis direction.

Similarly, the first end 41 of each fourth coil 4D is connected to one of the windings passing through one slot 34d adjacent to the fourth tooth 33D. The first end 41 of the fourth coil 4D is located on the side of the first end surface 31a with respect to the stator core 31 in the rotation axis direction. The second end 42 of each fourth coil 4D is connected to another of the windings passing through one slot 34d adjacent to the fourth tooth 33D. The second end 42 of the fourth coil 4D is located on the side of the second end surface 31b with respect to the stator core 31 in the rotation axis direction.

The first crossover wire 71 connects the first ends 41 of the third coils 4C to the first ends 41 of the fourth coils 4D. The second crossover wire 72 connects the second ends 42 of the fourth coils 4D to the second ends 42 of the third coils 4C.

In the manner described above, in a manner similar to the first coil group CG1, since the second coil group CG2 includes two types of coils 4 of the third coils 4C and the fourth coils 4D, the third coils 4C and the fourth coils 4D are alternately connected one by one, and the first crossover wire 71 and the second crossover wire 72 are alternately used for the connection. In the case of connecting the third coils 4C and the fourth coils 4D in this order in the turning direction, the first crossover wire 71 is used. In the case of connecting the fourth coils 4D and the third coils 4C in this order in the turning direction, the second crossover wire 72 is used.

The thus-configured stator core 31 further includes the second coil group CG2 in the same phase as the first coil group CG1. In the second coil group CG2, as in the first coil group CG1, in each coil 4, the number of windings passing through one slot 34 of the two slots 34 adjacent to the corresponding tooth 33 is larger than the number of windings passing through the other slot 34. Therefore, a peak of a magnetomotive force can be made even gentler across the entire circumferential direction, and torque ripples, demagnetization, or the like can be further reduced.

### -Winding Non-uniformity on Two Adjacent Teeth-

Next, the winding structure on the two adjacent teeth 33 will be described. As described above, the number of windings is different between two slots 34 adjacent to one tooth 33. When seen in two adjacent teeth 33, there are various aspects in which the number of windings is different between the slot 34 located between the two teeth 33 and the two slots 34 located circumferentially outward of the two teeth 33. The various aspects will be described below.

As described above, the n-th tooth 33 is adjacent to the (n+k)th tooth 33. The slots 34 include an inner slot 62 that is the slot 34 between the n-th tooth 33 and the (n+k)th tooth 33, a first outer slot 61 that is the slot 34 opposite to the inner slot 62 with respect to the n-th tooth 33, and a second outer slot 63 that is the slot 34 opposite to the inner slot 62 with respect to the (n+k)th tooth 33. That is, the first outer slot 61, the n-th tooth 33, the inner slot 62, the (n+k)th tooth 33, and the second outer slot 63 are arranged in this order in the circumferential direction.

In each of the n-th coils 4 wound around the n-th tooth 33, the number of windings passing through the first outer slot 61 is larger than the number of windings passing through the inner slot 62. In each of the (n+k)th coils 4 wound around the (n+k)th tooth 33, the number of windings passing through the second outer slot 63 is larger than the number of windings passing through the inner slot 62. That is, in each coil 4 wound around each of the two adjacent teeth 33, the number of windings in the inner slot 62 is smaller than the number of windings in the slot 34 opposite to the inner slot 62 with respect to the corresponding tooth 33.

With reference to FIG. 4 showing the case of k = 2, the winding structure of the coils 4 will be specifically described. The first tooth 33A and the third tooth 33C are adjacent to each other. The second tooth 33B and the fourth tooth 33D are adjacent to each other.

The slots 34 include an inner slot 62 that is the slot 34 between the first tooth 33A and the third tooth 33C, a first outer slot 61 that is the slot 34 opposite to the inner slot 62 with respect to the first tooth 33A, and a second outer slot 63 that is the slot 34 opposite to the inner slot 62 with respect to the third tooth 33C.

In each of the first coils 4A wound around the first tooth 33A, the number of windings passing through the first outer slot 61 is larger than the number of windings passing through the inner slot 62. In this example, in each first coil 4A, the number of windings passing through the first outer slot 61 is two, and the number of windings passing through the inner slot 62 is one. In FIG. 4, since the two first coils 4A are wound around the first tooth 33A, the number of windings passing through the first outer slot 61 is larger than the number of windings passing through the inner slot 62 by two in total.

In each of the third coils 4C wound around the third tooth 33C, the number of windings passing through the second outer slot 63 is larger than the number of windings passing through the inner slot 62. In this example, in each third coil 4C, the number of windings passing through the second outer slot 63 is two, and the number of windings passing through the inner slot 62 is one. In FIG. 4, since the two third coils 4C are wound around the third tooth 33C, the number of windings passing through the second outer slot 63 is larger than the number of windings passing through the inner slot 62 by two in total.

Similarly, the slots 34 include an inner slot 62 that is the slot 34 between the second tooth 33B and the fourth tooth 33D, a first outer slot 61 that is the slot 34 opposite to the inner slot 62 with respect to the second tooth 33B, and a second outer slot 63 that is the slot 34 opposite to the inner slot 62 with respect to the fourth tooth 33D.

In each of the second coils 4B wound around the second tooth 33B, the number of windings passing through the first outer slot 61 is larger than the number of windings passing through the inner slot 62. In this example, in each second coil 4B, the number of windings passing through the first outer slot 61 is two, and the number of windings passing through the inner slot 62 is one. In FIG. 4, since the two second coils 4B are wound around the second tooth 33B, the number of windings passing through the first outer slot 61 is larger than the number of windings passing through the inner slot 62 by two in total.

In each of the fourth coils 4D wound around the fourth tooth 33D, the number of windings passing through the second outer slot 63 is larger than the number of windings passing through the inner slot 62. In this example, in each fourth coil 4D, the number of windings passing through the second outer slot 63 is two, and the number of windings passing through the inner slot 62 is one. In FIG. 4, since the two fourth coils 4D are wound around the fourth tooth 33D, the number of windings passing through the second outer slot 63 is larger than the number of windings passing through the inner slot 62 by two in total.

In the winding structure of the stator core 31 described above, in each of the first coils 4A, the number of windings passing through the first outer slot 61 is larger than the number of windings passing through the inner slot 62, allowing a peak position in a circumferential distribution of a magnetomotive force generated by the first coils 4A to be shifted from the inner slot 62 toward the first outer slot 61. In each of the third coils 4C, since the number of windings passing through the second outer slot 63 is larger than the number of windings passing through the inner slot 62, it is possible to shift a peak position in a circumferential distribution of a magnetomotive force from the inner slot 62 toward the second outer slot 63.

Here, since the first coils 4A and the third coils 4C are in the same phase, a magnetomotive force by the first coils 4A and a magnetomotive force by the third coils 4C affect each other. In a case where the number of windings is the same in two slots 34 adjacent to the corresponding tooth 33 in each of the first coils 4A and the third coils 4C, the windings in the inner slot 62 can be more densely arranged than in the winding structure of the stator core 31 described above. Accordingly, the magnetomotive force by the first coils 4A and the magnetomotive force by the third coils 4C significantly affect each other, and a steep peak of the magnetomotive force can occur in the inner slot 62 and the vicinity thereof. By employing the winding structure of the stator core 31 described above, it is possible to shift a peak position of a magnetomotive force in each of the first coils 4A and the third coils 4C toward the sides of the first outer slot 61 and the second outer slot 63 relative to the inner slot 62, thereby suppressing occurrence of a steep peak of a magnetomotive force.

Similarly, in each of the second coils 4B, since the number of windings passing through the first outer slot 61 is larger than the number of windings passing through the inner slot 62, it is possible to shift a peak position in a circumferential distribution of a magnetomotive force generated by the second coils 4B from the inner slot 62 toward the first outer slot 61. In each of the fourth coils 4D, since the number of windings passing through the second outer slot 63 is larger than the number of windings passing through the inner slot 62, it is possible to shift a peak position in a circumferential distribution of a magnetomotive force from the inner slot 62 toward the second outer slot 63. As a result, occurrence of a steep peak of a magnetomotive force can be suppressed.

Next, another aspect of the winding structure in two adjacent teeth 33 will be described. In this aspect, in each coil 4 wound around each of the two adjacent teeth 33, the number of windings in the inner slot 62 is larger than the number of windings in the slot 34 opposite to the inner slot 62 with respect to the corresponding tooth 33.

That is, in each of the n-th coils 4 wound around the n-th tooth 33, the number of windings passing through the first outer slot 61 is smaller than the number of windings passing through the inner slot 62. In each of the (n+k)th coils 4 wound around the (n+k)th tooth 33, the number of windings passing through the second outer slot 63 is smaller than the number of windings passing through the inner slot 62.

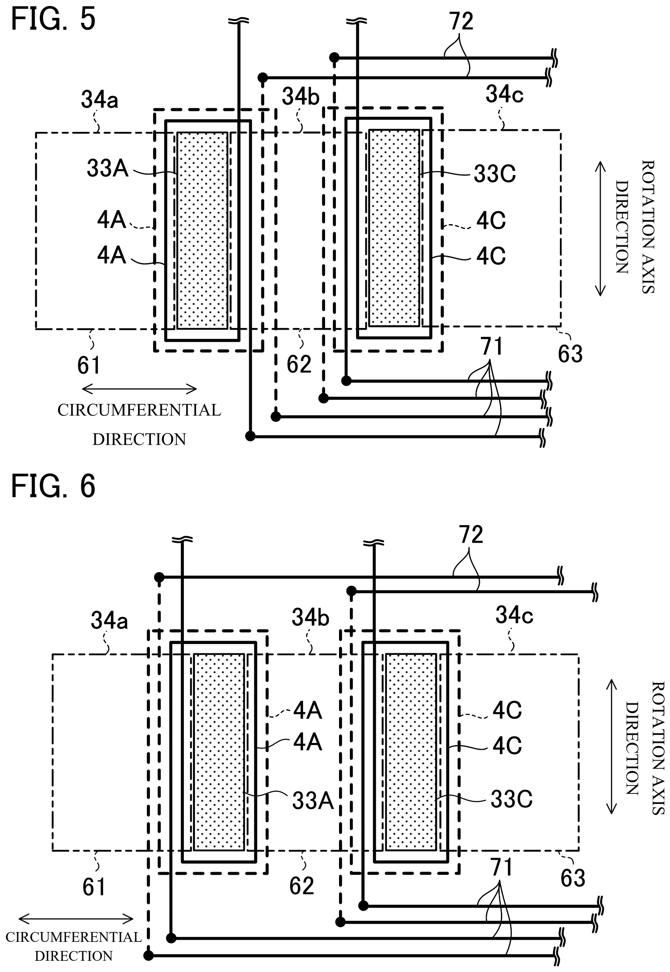

With reference to FIG. 5 showing the case of k = 2, the winding structure in this aspect will be specifically described. FIG. 5 is a schematic view for describing an example of the winding structure in two adjacent teeth 33. The winding structures in the first tooth 33A and the third tooth 33C, and the winding structures in the second tooth 33B and the fourth tooth 33D are generally line-symmetric in the circumferential direction. Thus, FIG. 5 does not show the winding structures in the second tooth 33B and the fourth tooth 33D.

In each of the first coils 4A wound around the first tooth 33A, the number of windings passing through the first outer slot 61 is smaller than the number of windings passing through the inner slot 62. In this example, in each first coil 4A, the number of windings passing through the first outer slot 61 is one, and the number of windings passing through the inner slot 62 is two. In FIG. 5, since the two first coils 4A are wound around the first tooth 33A, the number of windings passing through the first outer slot 61 is smaller than the number of windings passing through the inner slot 62 by two in total.

In each of the third coils 4C wound around the third tooth 33C, the number of windings passing through the second outer slot 63 is smaller than the number of windings passing through the inner slot 62. In this example, in each third coil 4C, the number of windings passing through the second outer slot 63 is one, and the number of windings passing through the inner slot 62 is two. In FIG. 5, since the two third coils 4C are wound around the third tooth 33C, the number of windings passing through the second outer slot 63 is smaller than the number of windings passing through the inner slot 62 by two in total.

In the winding structure of the stator core 31 described above, in each of the first coils 4A, the number of windings passing through the first outer slot 61 is smaller than the number of windings passing through the inner slot 62, allowing a peak position in a circumferential distribution of a magnetomotive force generated by the first coils 4A to be shifted from the first outer slot 61 toward the inner slot 62. In each of the third coils 4C, since the number of windings passing through the second outer slot 63 is smaller than the number of windings passing through the inner slot 62, it is possible to shift a peak position in a circumferential distribution of a magnetomotive force generated by the third coils 4C from the second outer slot 63 toward the inner slot 62. As a result, it is possible to obtain the stator core 31 with a large peak near the inner slot 62 in a circumferential distribution of a magnetomotive force.

Furthermore, another aspect of the winding structure in two adjacent teeth 33 will be described. In this aspect, regarding the coils 4 wound around two adjacent teeth 33, in the coils 4 wound around one tooth 33, the number of windings in the inner slot 62 is smaller than the number of windings in the slot 34 opposite to the inner slot 62 with respect to the corresponding tooth 33, whereas in the coils 4 wound around the other tooth 33, the number of windings in the inner slot 62 is larger than the number of windings in the slot 34 opposite to the inner slot 62 with respect to the corresponding tooth 33.

That is, in each of the n-th coils 4 wound around the n-th tooth 33, the number of windings passing through the first outer slot 61 is larger than the number of windings passing through the inner slot 62. In each of the (n+k)th coils 4 wound around the (n+k)th tooth 33, the number of windings passing through the second outer slot 63 is smaller than the number of windings passing through the inner slot 62.

With reference to FIG. 6 showing the case of k = 2, the winding structure in this aspect will be specifically described. FIG. 6 is a schematic view for describing an example of the winding structure in two adjacent teeth 33. Thus, FIG. 6 does not show the winding structures in the second tooth 33B and the fourth tooth 33D, in a manner similar to FIG. 5.

In each of the first coils 4A wound around the first tooth 33A, the number of windings passing through the first outer slot 61 is larger than the number of windings passing through the inner slot 62. In this example, in each first coil 4A, the number of windings passing through the first outer slot 61 is two, and the number of windings passing through the inner slot 62 is one. In FIG. 6, since the two first coils 4A are wound around the first tooth 33A, the number of windings passing through the first outer slot 61 is larger than the number of windings passing through the inner slot 62 by two in total.

In each of the third coils 4C wound around the third tooth 33C, the number of windings passing through the second outer slot 63 is smaller than the number of windings passing through the inner slot 62. In this example, in each third coil 4C, the number of windings passing through the second outer slot 63 is one, and the number of windings passing through the inner slot 62 is two. In FIG. 6, since the two third coils 4C are wound around the third tooth 33C, the number of windings passing through the second outer slot 63 is smaller than the number of windings passing through the inner slot 62 by two in total.

In the winding structure of the stator core 31 described above, in each of the first coils 4A, the number of windings passing through the first outer slot 61 is larger than the number of windings passing through the inner slot 62, allowing a peak position in a circumferential distribution of a magnetomotive force generated by the first coils 4A to be shifted from the inner slot 62 toward the first outer slot 61. In each of the third coils 4C, since the number of windings passing through the second outer slot 63 is smaller than the number of windings passing through the inner slot 62, it is possible to shift a peak position in a circumferential distribution of a magnetomotive force generated by the third coils 4C from the second outer slot 63 toward the inner slot 62.

Specifically, as illustrated in FIG. 6, since the number of windings passing through the first outer slot 61 is four, the number of windings passing through the inner slot 62 is six, and the number of windings passing through the second outer slot 63 is two, the density of the windings increases in the order of the second outer slot 63, the first outer slot 61, and the inner slot 62. As a result, it is possible to obtain the stator core 31 in which the magnetomotive force increases in the order of the second outer slot 63, the first outer slot 61, and the inner slot 62 in a circumferential distribution of the magnetomotive force.

### =Other Tooth Groups and Other Coil Groups=

Next, other tooth groups and other coil groups in the motor 1 will be described.

The teeth 33 further include a third tooth group including a (2k+1)th tooth 33 through a (3k)th tooth 33, a fourth tooth group including a (3k+1)th tooth 33 through a (4k)th tooth 33, a fifth tooth group including a (4k+1)th tooth 33 through a (5k)th tooth 33, and a sixth tooth group including a (5k+1)th tooth 33 through a (6k)th tooth 33. In addition, the coils 4 further include a third coil group corresponding to the third tooth group, a fourth coil group corresponding to the fourth tooth group, a fifth coil group corresponding to the fifth tooth group, and a sixth coil group corresponding to the sixth tooth group. The third coil group and the fourth coil group are in the same phase (e.g., V phase). The fifth coil group and the sixth coil group are in the same phase (e.g., W phase).

The case of k = 2 will be specifically described with reference to FIG. 1. The teeth 33 further include a third tooth group including a fifth tooth 33E and a sixth tooth 33F, a fourth tooth group including a seventh tooth 33G and an eighth tooth 33H, a fifth tooth group including a ninth tooth 33I and a tenth tooth 33J, and a sixth tooth group including an eleventh tooth 33K and a twelfth tooth 33L. The number of the teeth 33 and the number of the slots 34 are both 12. That is, the motor 1 is a 10-pole, 12-slot IPM motor.

In addition, the coils 4 further include a third coil group corresponding to the third tooth group, a fourth coil group corresponding to the fourth tooth group, a fifth coil group corresponding to the fifth tooth group, and a sixth coil group corresponding to the sixth tooth group. The winding structures of the third coil group and the fourth coil group and the winding structures of the fifth coil group and the sixth coil group are generally the same as the winding structures of the first coil group CG1 and the second coil group CG2, and thus, detailed explanation will not be repeated.

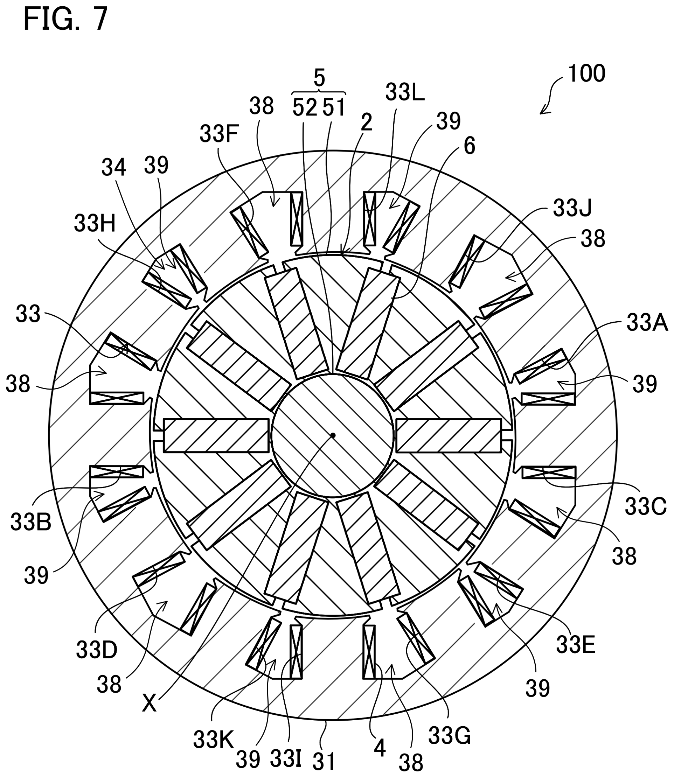

In FIG. 1, the cross-sectional areas of the slots 34 are approximately the same in the orthogonal cross section. However, the present disclosure is not limited to this example, and the cross sections of the slots 34 may be different. FIG. 7 is a cross-sectional view of a motor 100 in another aspect. The motor 100 is different from the motor 1 in the configuration of slots 34. The slots 34 may include first slots 38 through which a relatively large number of windings pass and second slots 39 through which a relatively small number of windings pass. For example, in a case where the first coil group CG1 has the winding structure shown in FIG. 4, slots 34a, 34c, 34d, and 34f correspond to the first slots 38, and slots 34b and 34e correspond to the second slots 39. In the orthogonal cross section, the cross-sectional area of each first slot 38 may be larger than the cross-sectional area of each second slot 39. Accordingly, the cross-sectional area of the slots 34 can be changed in accordance with the density of windings in each slot 34, and thus, the cross-sectional area of the stator core 31 can be increased. As a result, performance of the motor 100 can be enhanced.

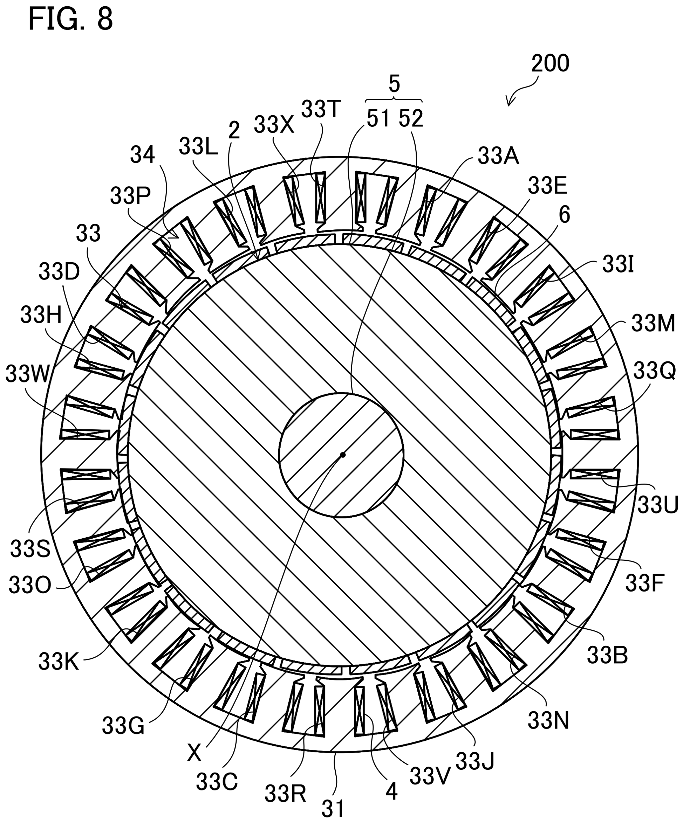

Next, as an example of the case of k = 4, a winding structure in a motor 200 in a different aspect from the motor 1 will be described. The motor 200 is a three-phase alternating current (AC) motor. A basic configuration of the motor 200 is the same as that of the motor 1. Thus, part of the configuration different from the motor 1 will be mainly described below. FIG. 8 is a cross-sectional view of the motor 200.

In the motor 200, the number of teeth 33 and the number of slots 34 are both 24. Magnets 6 are located on the outer peripheral surface of a rotor core 51. The number of magnets 6 is 20. That is, the motor 200 is a 20-pole, 24-slot surface permanent magnet (SPM) motor. The magnet 6 may be, for example, a neodymium magnet, a samarium iron nitrogen-based magnet, a samarium cobalt-based magnet, a ferrite magnet, or an alnico magnet. The magnets 6 are, for example, sintered magnets.

Each of the magnets 6 has a plate shape. Each magnet 6 has a longitudinal direction, a width direction, and a thickness direction that are orthogonal to one another. The length direction of the magnet 6 coincides with the rotation axis direction. The width direction of the magnet 6 coincides with the circumferential direction. The thickness direction of the magnet 6 coincides with the radial direction. The magnet 6 extends in an arc shape in the width direction. The magnet 6 is fixed to the rotor core 51. The surface of the magnet 6 on the opposite side of the rotor core 51 is a portion of the outer peripheral surface of the rotor 2. The magnet 6 faces the stator core 31.

The magnets 6 are arranged at regular intervals in the circumferential direction. The magnets 6 are magnetized in the thickness direction. In each of the magnets 6, one of the two opposed surfaces in the thickness direction serves as a south pole. The other surface serves as a north pole. The magnetization directions of any two of the magnets 6 adjacent to each other in the circumferential direction are opposite to each other. The thus-arranged magnets 6 alternately constitute different magnetic poles in the circumferential direction in a rotor body 5.

In a manner similar to the motor 1, the teeth 33 are divided into tooth groups. Specifically, the teeth 33 include a first tooth group TG1, a second tooth group TG2, a third tooth group, a fourth tooth group, a fifth tooth group, and a sixth tooth group.

The first tooth group TG1 includes a first tooth 33A, a second tooth 33B, a third tooth 33C, and a fourth tooth 33D. The second tooth group TG2 includes a fifth tooth 33E, a sixth tooth 33F, a seventh tooth 33G, and an eighth tooth 33H. The third tooth group includes a ninth tooth 33I, a tenth tooth 33J, an eleventh tooth 33K, and a twelfth tooth 33L. The fourth tooth group includes a thirteenth tooth 33M, a fourteenth tooth 33N, a fifteenth tooth 33O, and a sixteenth tooth 33P. The fifth tooth group includes a seventeenth tooth 33Q, an eighteenth tooth 33R, a nineteenth tooth 33S, and a twentieth tooth 33T. The sixth tooth group includes a twenty-first tooth 33U, a twenty-second tooth 33V, a twenty-third tooth 33W, and a twentyfourth tooth 33X.

The coils 4 include coil groups. Specifically, the coils 4 include a first coil group CG1, a second coil group CG2, a third coil group, a fourth coil group, a fifth coil group, and a sixth coil group. The first coil group CG1, the second coil group CG2, the third coil group, the fourth coil group, the fifth coil group, and the sixth coil group correspond to the first tooth group TG1, the second tooth group TG2, the third tooth group, the fourth tooth group, the fifth tooth group, and the sixth tooth group, respectively.

The first coil group CG1 and the second coil group CG2 are in the same phase (e.g., U phase). The third coil group and the fourth coil group are in the same phase (e.g., V phase). The fifth coil group and the sixth coil group are in the same phase (e.g., W phase).

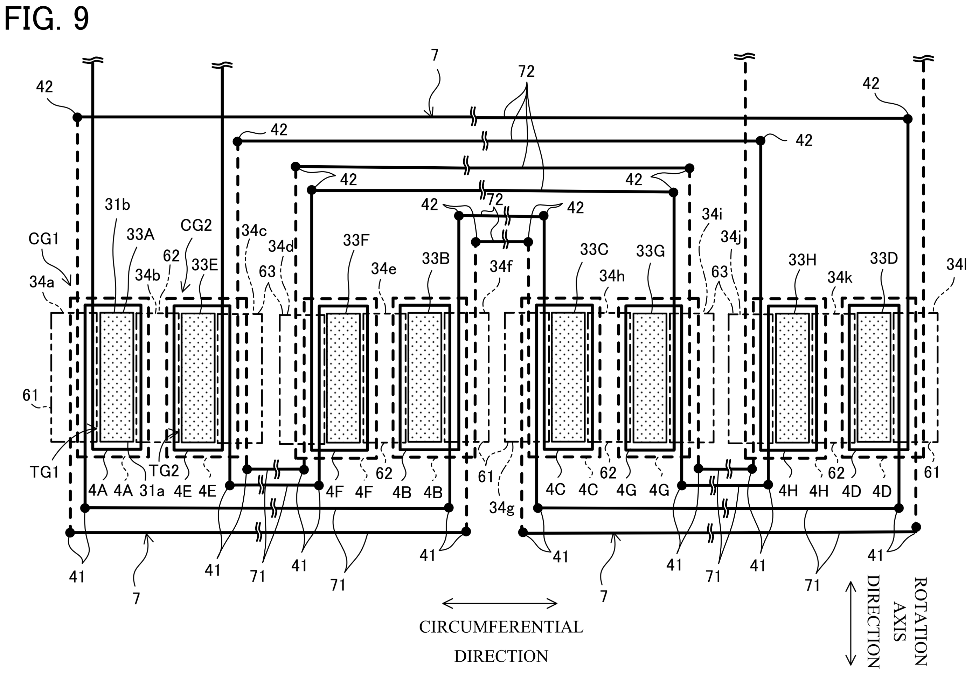

FIG. 9 is a schematic view showing winding structures in the first coil group CG1 and the second coil group CG2, and is a development view of the teeth when seen from the radially inner side. FIG. 9 shows an example of the first tooth group TG1, the second tooth group TG2, the first coil group CG1, and the second coil group CG2 in the case of k = 4. In FIG. 9, the left-right direction on the paper corresponds to the circumferential direction. The winding structures in the third coil group and the fourth coil group and the winding structures in the fifth coil group and the sixth coil group are generally the same as the winding structures in the first coil group CG1 and the second coil group CG2, and thus, detailed explanation will not be repeated.

The first tooth 33A and the fifth tooth 33E are adjacent to each other in the circumferential direction. The second tooth 33B and the sixth tooth 33F are adjacent to each other in the circumferential direction. The third tooth 33C and the seventh tooth 33G are adjacent to each other in the circumferential direction. The fourth tooth 33D and the eighth tooth 33H are adjacent to each other in the circumferential direction.

The first coil group CG1 includes first coils 4A, second coils 4B, third coils 4C, and fourth coils 4D. The first coils 4A through the fourth coils 4D are formed of a single continuous lead wire. The first coils 4A through the fourth coils 4D are in the same phase. The second coil group CG2 includes fifth coils 4E, sixth coils 4F, seventh coils 4G, and eighth coils 4H. The fifth coils 4E through the eighth coils 4H are formed of a single continuous lead wire. The fifth coils 4E through the eighth coils 4H are in the same phase as the first coils 4A through the fourth coils 4D. That is, all the first coils 4A through the eighth coils 4H are in the same phase.

The first coils 4A are wound around the first tooth 33A. The second coils 4B are wound around the second tooth 33B. The third coils 4C are wound around the third tooth 33C. The fourth coils 4D are wound around the fourth tooth 33D. The fifth coils 4E are wound around the fifth tooth 33E. The sixth coils 4F are wound around the sixth tooth 33F. The seventh coils 4G are wound around the seventh tooth 33G. The eighth coils 4H are wound around the eighth tooth 33H.

In each of the first coils 4A through the eighth coils 4H, the number of windings passing through one slot 34 adjacent to the corresponding tooth 33 is larger than the number of windings passing through the other slot 34 adjacent to the corresponding tooth 33. In this example, the number of windings passing through one slot 34 is two, and the number of windings passing through the other slot 34 is one. In FIG. 9, since two coils 4 are wound around each tooth 33, the number of windings passing through one slot 34 is larger than the number of windings passing through the other slot 34 by two in total. That is, in a manner similar to the motor 1, the number of windings passing through one slot 34 and the number of windings passing through the other slot 34 are not equal, and are non-uniform.

In the first coil group CG1, the coils 4 included in the first coils 4A through the fourth coils 4D are connected one by one in series via crossover wires 7 to repeatedly turn in ascending order from the first. The fourth coils 4D are connected to the first coils 4A via the crossover wires 7.

Specifically, in a manner similar to the motor 1, the crossover wires 7 include a first crossover wire 71 located on the side of the first end surface 31a of the stator core 31, and a second crossover wire 72 located on the side of the second end surface 31b of the stator core 31.

A first end 41 of each first coil 4A, a first end 41 of each second coil 4B, a first end 41 of each third coil 4C, and a first end 41 of each fourth coil 4D are all located on the side of the first end surface 31a. A second end 42 of each first coil 4A, a second end 42 of each second coil 4B, a second end 42 of each third coil 4C, and a second end 42 of each fourth coil 4D are all located on the side of the second end surface 31b.

The first crossover wire 71 connects the first end 41 of an odd-numbered coil 4 to the first end 41 of an even-numbered coil 4 among the first coils 4A through the fourth coils 4D. Specifically, the first crossover wire 71 connects the first ends 41 of the first coils 4A to the first ends 41 of the second coils 4B. The first crossover wire 71 connects the first ends 41 of the third coils 4C to the first ends 41 of the fourth coils 4D. The second crossover wire 72 connects the second end 42 of an even-numbered coil 4 to the second end 42 of an odd-numbered coil 4 among the first coils 4A through the fourth coils 4D. Specifically, the second crossover wire 72 connects the second ends 42 of the second coils 4B to the second ends 42 of the third coils 4C. The second crossover wire 72 connects the second ends 42 of the fourth coils 4D to the second ends 42 of the first coils 4A.

More specifically, the first end 41 of each first coil 4A, the first end 41 of each second coil 4B, the first end 41 of each third coil 4C, and the first end 41 of each fourth coil 4D are all connected to one of the windings passing through one slot 34 adjacent to the corresponding tooth 33. The second end 42 of each first coil 4A, the second end 42 of each second coil 4B, the second end 42 of each third coil 4C, and the second end 42 of each fourth coil 4D are all connected to another of the windings passing through the one slot 34.

Similarly, in the second coil group CG2, the coils 4 included in the fifth coils 4E through the eighth coils 4H are connected one by one in series via crossover wires 7 to repeatedly turn in ascending order from the fifth. The eighth coils 4H are connected to the fifth coils 4E via the crossover wires 7.

The first end 41 of each fifth coil 4E, the first end 41 of each sixth coil 4F, the first end 41 of each seventh coil 4G, and the first end 41 of each eighth coil 4H are all located on the side of the first end surface 31a. The second end 42 of each fifth coil 4E, the second end 42 of each sixth coil 4F, the second end 42 of each seventh coil 4G, and the second end 42 of each eighth coil 4H are all located on the side of the second end surface 31b.

The first crossover wire 71 connects the first end 41 of an odd-numbered coil 4 to the first end 41 of an even-numbered coil 4 among the fifth coils 4E through the eighth coils 4H. Specifically, the first crossover wire 71 connects the first ends 41 of the fifth coils 4E to the first ends 41 of the sixth coils 4F. The first crossover wire 71 connects the first ends 41 of the seventh coils 4G to the first ends 41 of the eighth coils 4H. The second crossover wire 72 connects the second end 42 of an even-numbered coil 4 to the second end 42 of an odd-numbered coil 4 among the fifth coils 4E through the eighth coils 4H. Specifically, the second crossover wire 72 connects the second ends 42 of the sixth coils 4F to the second ends 42 of the seventh coils 4G. The second crossover wire 72 connects the second ends 42 of the eighth coils 4H to the second ends 42 of the fifth coils 4E.

More specifically, the first end 41 of each fifth coil 4E, the first end 41 of each sixth coil 4F, the first end 41 of each seventh coil 4G, and the first end 41 of each eighth coil 4H are all connected to one of the windings passing through one slot 34 adjacent to the corresponding tooth 33. The second end 42 of each fifth coil 4E, the second end 42 of each sixth coil 4F, the second end 42 of each seventh coil 4G, and the second end 42 of each eighth coil 4H are all connected to another of the windings passing through the one slot 34.

The slots 34 include an inner slot 62 that is the slot 34 between the first tooth 33A and the fifth tooth 33E, a first outer slot 61 that is the slot 34 opposite to the inner slot 62 with respect to the first tooth 33A, and a second outer slot 63 that is the slot 34 opposite to the inner slot 62 with respect to the fifth tooth 33E.

In this example, in each of the first coils 4A wound around the first tooth 33A, the number of windings passing through the first outer slot 61 is larger than the number of windings passing through the inner slot 62. Specifically, in each first coil 4A, the number of windings passing through the first outer slot 61 is two, and the number of windings passing through the inner slot 62 is one. In each of the fifth coils 4E wound around the fifth tooth 33E, the number of windings passing through the second outer slot 63 is larger than the number of windings passing through the inner slot 62. Specifically, in each fifth coil 4E, the number of windings passing through the second outer slot 63 is two, and the number of windings passing through the inner slot 62 is one.

Similarly, the slots 34 include an inner slot 62 that is the slot 34 between the second tooth 33B and the sixth tooth 33F, a first outer slot 61 that is the slot 34 opposite to the inner slot 62 with respect to the second tooth 33B, and a second outer slot 63 that is the slot 34 opposite to the inner slot 62 with respect to the sixth tooth 33F. The slots 34 include an inner slot 62 that is the slot 34 between the third tooth 33C and the seventh tooth 33G, a first outer slot 61 that is the slot 34 opposite to the inner slot 62 with respect to the third tooth 33C, and a second outer slot 63 that is the slot 34 opposite to the inner slot 62 with respect to the seventh tooth 33G. The slots 34 include an inner slot 62 that is the slot 34 between the fourth tooth 33D and the eighth tooth 33H, a first outer slot 61 that is the slot 34 opposite to the inner slot 62 with respect to the fourth tooth 33D, and a second outer slot 63 that is the slot 34 opposite to the inner slot 62 with respect to the eighth tooth 33H.

Similarly to the winding structure in the first tooth 33A and the fifth tooth 33E described above, retarding the second tooth 33B and the sixth tooth 33F, in each of the second coils 4B wound around the second tooth 33B, the number of windings passing through the first outer slot 61 is larger than the number of windings passing through the inner slot 62. In each of the fifth coils 4E wound around the sixth tooth 33F, the number of windings passing through the second outer slot 63 is larger than the number of windings passing through the inner slot 62. The same holds for the third tooth 33C and the seventh tooth 33G, as well as to the fourth tooth 33D and the eighth tooth 33H.

In the stator core 31 of the motor 200 configured as described above, in a manner similar to the motor 1, in each coil 4, since the number of windings passing through one slot 34 of the two slots 34 adjacent to the corresponding tooth 33 is larger than the number of windings passing through the other slot 34, a magnetomotive force is high around the large number of windings. This makes it possible to shift a peak position in a circumferential distribution of a magnetomotive force by the coils 4 to a side where the number of windings is larger. For example, in the first coils 4A, since the number of windings passing through the first outer slot 61 is larger than the number of windings passing through the inner slot 62, it is possible to shift a peak position in a circumferential distribution of a magnetomotive force generated by the first coils 4A from the inner slot 62 toward the first outer slot 61. In the fifth coils 4E, since the number of windings passing through the second outer slot 63 is larger than the number of windings passing through the inner slot 62, it is possible to shift a peak position in a circumferential distribution of a magnetomotive force by the fifth coils 4E from the inner slot 62 toward the second outer slot 63. Consequently, the peak of the magnetomotive force can be made gentle, and torque ripples, demagnetization, or the like can be reduced.

The winding structure with different numbers of windings may have a configuration described below from another perspective. That is, the winding structure with different numbers of windings described above may have the following configuration without the crossover wires 7.

The coils 4 include the first coil group CG1 including the first coil 4 through the k-th coil 4, and the second coil group CG2 including the (k+1)th coil 4 through the (2k)th coil 4. The first coil group CG1 and the second coil group CG2 are in the same phase. The n-th coil 4 is wound around the n-th tooth 33. The (n+k)th coil 4 is wound around the (n+k)th tooth 33. In the n-th coil 4 wound around the n-th tooth 33, the number of windings passing through one slot 34 adjacent to the n-th tooth 33 is larger than the number of windings passing through the other slot 34 adjacent to the n-th tooth 33. In the (n+k)th coil 4 wound around the (n+k)th tooth 33, the number of windings passing through one slot 34 adjacent to the (n+k)th tooth 33 is larger than the number of windings passing through the other slot 34 adjacent to the (n+k)th tooth 33.

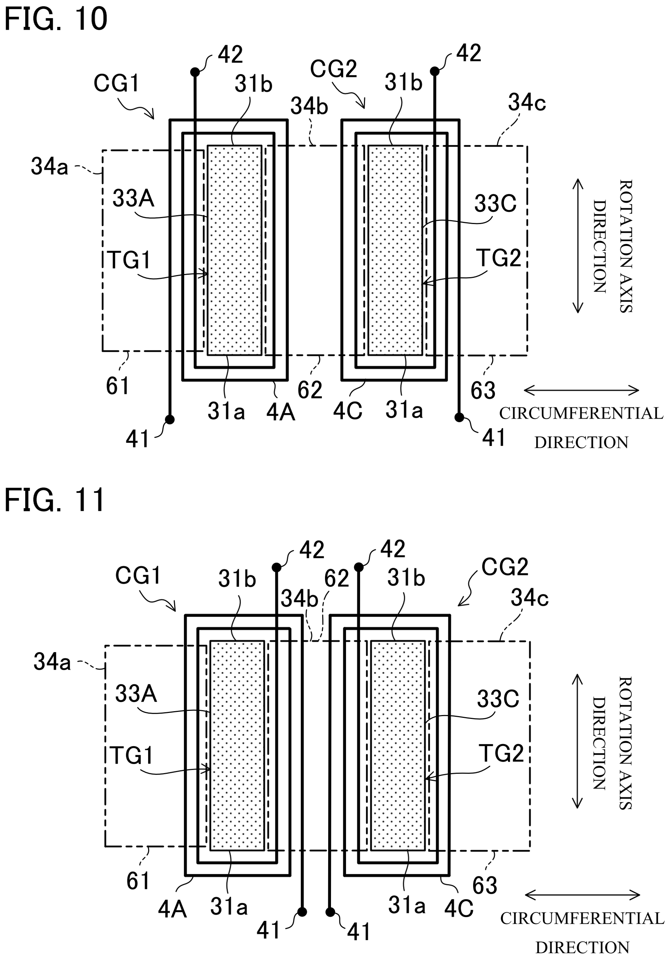

With reference to FIG. 10 showing the case of k = 2, the winding structure from another perspective will be specifically described. FIG. 10 is a schematic view for describing a winding structure from another perspective. FIG. 10 shows the winding structures in the first tooth 33A included in the first tooth group TG1 and the third tooth 33C included in the second tooth group TG2. The winding structure illustrated in FIG. 10 is generally the same as the winding structure shown in FIG. 4, except for the number of coils 4 wound around each tooth 33 and the fact that no crossover wires 7 are used. Thus, the following description will be directed mainly to a configuration different from the winding structure shown in FIG. 4.

The coils 4 include a first coil group CG1 including a first coil 4A and a second coil group CG2 including a third coil 4C. The first coil group CG1 and the second coil group CG2 are in the same phase. That is, the first coil 4A and the third coil 4C are in the same phase. The first coil 4A is wound around the first tooth 33A. In this example, the number of the first coil 4A is one. The third coil 4C is wound around the third tooth 33C. In this example, the number of the third coil 4C is one.

Specifically, similarly to the winding structure shown in FIG. 4, the winding of the first coil 4A starts being wound to pass through one slot 34a and finishes being wound to pass through the same slot 34a. As a result, the number of windings passing through the one slot 34a is larger than the number of windings passing through the other slot 34b by one. A first end 41 and a second end 42 of the first coil 4A are connected to, for example, an external device or the like that supplies a current to the first coil 4A.

Similarly, the winding of the third coil 4C starts being wound to pass through one slot 34c and finishes being wound to pass through the same slot 34c. As a result, the number of windings passing through the one slot 34c is larger than the number of windings passing through the other slot 34b by one. A first end 41 and a second end 42 of the third coil 4C are connected to, for example, an external device or the like that supplies a current to the third coil 4C.

Unlike the motor 1, the first coil 4A and the third coil 4C are not connected to other coils through crossover wires 7.

In the first coil 4A, the number of windings passing through one slot 34 adjacent to the first tooth 33A is larger than the number of windings passing through the other slot 34 adjacent to the first tooth 33A. Specifically, in the first coil 4A, the number of windings passing through one slot 34a is three, and the number of windings passing through the other slot 34b is two. In the third coil 4C, the number of windings passing through one slot 34c adjacent to the third tooth 33C is larger than the number of windings passing through the other slot 34b adjacent to the third tooth 33C. Specifically, in the third coil 4C, the number of windings passing through the one slot 34c is three, and the number of windings passing through the other slot 34b is two.

In the stator core 31 configured as described above, similarly to the stator core 31 of the motor 1, in the first coil 4A corresponding to the first tooth 33A, the number of windings may be made different between the two slots 34 adjacent to the first tooth 33A. Similarly, in the third coil 4C corresponding to the third tooth 33C, the number of windings may be made different between the two slots 34 adjacent to the third tooth 33C. As a result, it is possible to shift a peak position in a circumferential distribution of a magnetomotive force by the coils 4 to a side where the number of windings is larger.

Further, similarly to the winding structure shown in FIG. 4, in the n-th coil 4, the number of windings passing through the first outer slot 61 is larger than the number of windings passing through the inner slot 62. In the (n+k)th coil 4, the number of windings passing through the second outer slot 63 is larger than the number of windings passing through the inner slot 62.

To be more specific with reference to FIG. 10 showing the case of k = 2, in the first coil 4A, the number of windings passing through the first outer slot 61 is larger than the number of windings passing through the inner slot 62. Specifically, the number of windings passing through the first outer slot 61 is three, and the number of windings passing through the inner slot 62 is two. As a result, it is possible to shift a peak position in a circumferential distribution of a magnetomotive force generated by the first coil 4A from the inner slot 62 toward the first outer slot 61. In the third coil 4C, the number of windings passing through the second outer slot 63 is larger than the number of windings passing through the inner slot 62. Specifically, in the third coil 4C, the number of windings passing through the second outer slot 63 is three, and the number of windings passing through the inner slot 62 is two. As a result, it is possible to shift a peak position in a circumferential distribution of a magnetomotive force generated by the third coil 4C from the inner slot 62 toward the second outer slot 63. As a result, similarly to the example of the winding structure shown in FIG. 4, occurrence of a steep peak of a magnetomotive force in the inner slot 62 and the vicinity thereof can be suppressed.

### <<OTHER EMBODIMENTS>>

In the foregoing section, the embodiment has been described as an example of the technique disclosed in the present application. The technique disclosed here, however, is not limited to this embodiment, and is applicable to other embodiments obtained by changes, replacements, additions, and/or omissions as necessary. Components described in the above embodiment may be combined as a new exemplary embodiment. Components provided in the accompanying drawings and the detailed description can include components unnecessary for solving problems as well as components necessary for solving problems in order to exemplify the technique. Therefore, it should not be concluded that such unnecessary components are necessary only because these unnecessary components are included in the accompanying drawings or the detailed description.

The number of the teeth 33 and the number of the magnets 6 are not limited. For example, each of the motor 1, the motor 100, and the motor 200 are a 10-pole, 12-slot motor or a 20-pole, 24-slot motor, but may be a 10n12n-slot (where n is an integer of 3 or more) motor.

In the motor 1, the motor 100, and the motor 200, two coils 4 are wound around each tooth 33, but three or more coils 4 may be wound around each tooth 33. The number of turns of coils 4 wound around the tooth 33 is not limited. The number of turns is not limited, either. The number of turns may be two or more.

The motor according to the present disclosure functions not only as an electric motor that generates power but also as an electric generator that generates electric power. Therefore, the present disclosure may be applied to an electric generator.

In the motor 1, in each first coil 4A, the number of windings passing through the first outer slot 61 may be smaller than the number of windings passing through the inner slot 62, and in each third coil 4C, the number of windings passing through the second outer slot 63 may be larger than the number of windings passing through the inner slot 62.

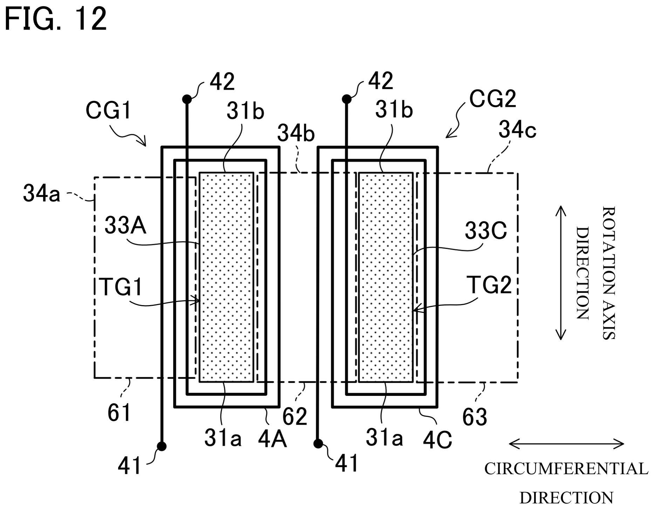

In the example shown in FIG. 10, in each first coil 4A, the number of windings passing through the first outer slot 61 may be smaller than the number of windings passing through the inner slot 62, and in each third coil 4C, the number of windings passing through the second outer slot 63 may be smaller than the number of windings passing through the inner slot 62. That is, as illustrated in FIG. 11, the windings may be densely arranged in the inner slot 62. FIG. 11 is a schematic view for describing a winding structure in another aspect. The first coil 4A is an example of the n-th coil, and the third coil 4C is an example of the (n+k)th coil. As illustrated in FIG. 12, in each first coil 4A, the number of windings passing through the first outer slot 61 may be larger than the number of windings passing through the inner slot 62, and in each third coil 4C, the number of windings passing through the second outer slot 63 may be smaller than the number of windings passing through the inner slot 62. FIG. 12 is a schematic view for describing a winding structure in another aspect. In each first coil 4A, the number of windings passing through the first outer slot 61 may be smaller than the number of windings passing through the inner slot 62, and in each third coil 4C, the number of windings passing through the second outer slot 63 may be larger than the number of windings passing through the inner slot 62.

In the example illustrated in FIG. 10, one coil 4 is wound around one tooth 33, but multiple coils 4 may be wound around one tooth 33. These coils 4 are not connected via the crossover wire 7. Both ends of each of the coils 4 are connected to, for example, an external device or the like that supplies a current to the coil 4. For each additional coil 4 wound around one tooth 33, the difference in the number of windings between the two slots 34 adjacent to this tooth 33 may be incremented by one.

In the examples shown in FIGS. 10 through 12, similarly to the motor 100 shown in FIG. 7, the slots 34 may include a first slot 38 through which a relatively large number of windings pass and a second slot 39 through which a relatively small number of windings pass. For example, in the example illustrated in FIG. 10, the slots 34a and 34c correspond to the first slot 38, and the slot 34b corresponds to the second slot 39. In a cross section orthogonal to the rotation shaft X, the cross-sectional area of the first slot 38 may be larger than the cross-sectional area of the second slot 39. Accordingly, the cross-sectional area of the slots 34 can be changed in accordance with the density of windings in each slot 34, and thus, the cross-sectional area of the stator core 31 can be increased. As a result, performance of the motor can be enhanced.

The techniques of the present disclosure described above are summarized as follows.
[1] A motor 1, 100, 200 includes: a stator core 31 including teeth 33 and slots 34 alternately arranged in a circumferential direction about a predetermined rotation axis X; and coils 4 wound around the teeth 33, the teeth 33 include a first tooth group TG1 including a first tooth 33 through a k-th tooth 33 (where k is an even integer), the coils 4 include a first coil group CG1 including first coils 4 through k-th coils 4, the first coils 4 through the k-th coils 4 are in the same phase, n-th coils 4 (where n = 1 to k) are wound around an n-th tooth 33, in each of the n-th coils 4, the number of windings passing through one slot 34 adjacent to the n-th tooth 33 is larger than the number of windings passing through another slot 34 adjacent to the n-th tooth 33, and coils 4 included in the first coils 4 through the k-th coils 4 are connected one by one in series via a crossover wire 7 to repeatedly turn in ascending order from the first.

With this configuration, in the n-th coils 4, the number of windings can be made different between the two slots 34 adjacent to the n-th tooth 33 around which the n-th coils 4 are wound. This makes it possible to shift a peak position in a circumferential distribution of a magnetomotive force by the coils 4 to a side where the number of windings is larger. As a result, a desired circumferential distribution of a magnetomotive force can be achieved.

[2] In the motor 1, 100, 200 of [1], the crossover wire 7 includes a first crossover wire 71 and a second crossover wire 72, the first crossover wire 71 being located on a side of a first end surface 31a in both end surfaces of the stator core 31 in a direction along the rotation axis X, the second crossover wire 72 being located on a side of a second end surface 31b in the both end surfaces of the stator core 31, a first end 41 in both ends of each of the n-th coils 4 is located on a side of the first end surface 31a, a second end 42 in the both ends of each of the n-th coils 4 is located on a side of the second end surface 31b, the first crossover wire 71 connects the first end 41 of an odd-numbered coil 4 to the first end 41 of an even-numbered coil 4 among the first coils 4 through the k-th coils 4, and the second crossover wire 72 connects the second end 42 of an even-numbered coil 4 to the second end 42 of an odd-numbered coil 4 among the first coils 4 through the k-th coils 4.

This configuration can simplify routing of the crossover wires 7, and facilitate the configuration in which the number of windings is different between the two adjacent slots 34.

[3] In the motor 1, 100, 200 of [1] or [2], the first end 41 of each of the n-th coils 4 is connected to one of windings passing through the one slot 43 adjacent to the n-th tooth 33, and the second end 42 of each of the n-th coils 4 is connected to another of the windings passing through the one slot 34 adjacent to the n-th tooth 33.

This configuration facilitates the above-described configuration in which the number of windings is different between the two adjacent slots 34.

[4] The motor 1, 100, 200 of any one of [1] to [3], the teeth 33 further include a second tooth group TG2 including a (k+1)th tooth 33 through a (2k)th tooth 33, the coils 4 further include a second coil group TG2 including (k+1)th coils 4 through (2k)th coils 4, the second coil group TG2 being in the same phase as the first coil group CG1, (n+k)th coils 4 are wound around an (n+k)th tooth 33, the n-th tooth 33 and the (n+k)th tooth 33 are adjacent to each other, in each of the (n+k)th coils 4, the number of windings passing through one slot 34 adjacent to the (n+k)th tooth 33 is larger than the number of windings passing through another slot 34 adjacent to the (n+k)th tooth 33, and coils 4 included in the (k+1)th coils 4 through the (2k)th coils 4 are connected one by one in series via a crossover wire 7 to repeatedly turn in ascending order from the (k+1)th.

This configuration can obtain the above-described configuration in which the number of windings is also different between the two adjacent slots 34 in the second coil group CG2 that is in the same phase as the first coil group CG1. This also makes it possible to shift a peak position in a circumferential distribution of a magnetomotive force by the coils 4 to a side where the number of windings is larger in the coils 4 included in the second coil group CG2. As a result, the peak of the magnetomotive force can be made gentler across the entire circumferential direction, and torque ripples, demagnetization, or the like can be further reduced.

[5] In the motor 1, 100, 200 of any one of [1] to [4], the slots 34 include an inner slot 62 that is a slot 34 between the n-th tooth 33 and the (n+k)th tooth 33, a first outer slot 61 that is a slot 34 opposite to the inner slot 62 with respect to the n-th tooth 33, and a second outer slot 63 that is a slot 34 opposite to the inner slot 62 with respect to the (n+k)th tooth 33, in each of the n-th coils 4 wound around the n-th tooth 33, the number of windings passing through the first outer slot 61 is larger than the number of windings passing through the inner slot 62, and in each of the (n+k)th coils 4 wound around the (n+k)th tooth 33, the number of windings passing through the second outer slot 63 is larger than the number of windings passing through the inner slot 62.

This configuration makes it possible to shift a peak position in a circumferential distribution of a magnetomotive force generated by the coils 4 wound around the n-th tooth 33 from the inner slot 62 toward the first outer slot 61. It is possible to shift a peak position in a circumferential distribution of a magnetomotive force generated by the coils 4 wound around the (n+k)th tooth 33 from the inner slot 62 toward the second outer slot 63. As a result, occurrence of a steep peak of a magnetomotive force in the inner slot 62 and the vicinity thereof can be suppressed.

[6] In the motor 1, 100, 200 of any one of [1] to [5], the slots 34 include an inner slot 62 that is a slot 34 between the n-th tooth 33 and the (n+k)th tooth 33, a first outer slot 61 that is a slot 34 opposite to the inner slot 62 with respect to the n-th tooth 33, and a second outer slot 63 that is a slot 34 opposite to the inner slot 62 with respect to the (n+k)th tooth 33, in each of the n-th coils 4 wound around the n-th tooth 33, the number of windings passing through the first outer slot 61 is smaller than the number of windings passing through the inner slot 62, and in each of the (n+k)th coils 4 wound around the (n+k)th tooth 33, the number of windings passing through the second outer slot 63 is smaller than the number of windings passing through the inner slot 62.

This configuration makes it possible to shift a peak position in a circumferential distribution of a magnetomotive force generated by the coils 4 wound around the n-th tooth 33 from the first outer slot 61 toward the inner slot 62. It is possible to shift a peak position in a circumferential distribution of a magnetomotive force generated by the coils 4 wound around the (n+k)th tooth 33 from the second outer slot 63 toward the inner slot 62. As a result, it is possible to obtain the stator core 31 with a large peak near the inner slot 62 and the vicinity thereof in a circumferential distribution of a magnetomotive force.

[7] In the motor 1, 100, 200 of any one of [1] to [6], the slots 34 include an inner slot 62 that is a slot 34 between the n-th tooth 33 and the (n+k)th tooth 33, a first outer slot 61 that is a slot 34 opposite to the inner slot 62 with respect to the n-th tooth 33, and a second outer slot 63 that is a slot 34 opposite to the inner slot 62 with respect to the (n+k)th tooth 33, in each of the n-th coils 4 wound around the n-th tooth 33, the number of windings passing through the first outer slot 61 is larger than the number of windings passing through the inner slot 62, and in each of the (n+k)th coils 4 wound around the (n+k)th tooth 33, the number of windings passing through the second outer slot 63 is smaller than the number of windings passing through the inner slot 62.

This configuration makes it possible to shift a peak position in a circumferential distribution of a magnetomotive force generated by the coils 4 wound around the n-th tooth 33 from the inner slot 62 toward the first outer slot 61. It is possible to shift a peak position in a circumferential distribution of a magnetomotive force generated by the coils 4 wound around the (n+k)th tooth 33 from the second outer slot 63 toward the inner slot 62. As a result, it is possible to obtain the stator core 31 in which the magnetomotive force increases in the order of the second outer slot 63, the first outer slot 61, and the inner slot 62, for example, in a circumferential distribution of the magnetomotive force.

[8] In the motor 1, 100, 200 of any one of [1] to [7], the slots 34 include a first slot 38 through which a relatively large number of windings pass, and a second slot 39 through which a relatively small number of windings pass, and in a cross section orthogonal to the rotation axis X, a cross-sectional area of the first slot 38 is larger than a cross-sectional area of the second slot 39.

With this configuration, the cross-sectional area of the slots 34 can be changed in accordance with the density of windings in each slot 34, and thus, the cross-sectional area of the stator core 31 can be increased. As a result, performance of the motor 1, 100, 200 can be enhanced.

[9] A motor includes: a stator core 31 including teeth 33 and slots 34 alternately arranged in a circumferential direction about a predetermined rotation axis X; and coils 4 wound around the teeth 33, the teeth 33 include a first tooth group TG1 including a first tooth 33 through a k-th tooth 33 (where k is an even integer), and a second tooth group TG2 including a (k+1)th tooth 33 through a (2k)th tooth 33, an n-th tooth 33 and an (n+k)th tooth are adjacent to each other, the coils 4 include a first coil group CG1 including a first coil 4 through a k-th coil 4, and a second coil group CG2 including a (k+1)th coil 4 through a (2k)th coil 4, the first coil group CG1 and the second coil group CG2 are in the same phase, an n-th coil 4 is wound around the n-th tooth 33, an (n+k)th coil 4 is wound around the (n+k)th tooth 33, in the n-th coil 4 wound around the n-th tooth 33, the number of windings passing through one slot 34 adjacent to the n-th tooth 33 is larger than the number of windings passing through another slot 34 adjacent to the n-th tooth 33, and in an (n+k)th coil 4 wound around the (n+k)th tooth 33, the number of windings passing through one slot 34 adjacent to the (n+k)th tooth 33 is larger than the number of windings passing through another slot 34 adjacent to the (n+k)th tooth 33.

This configuration makes it possible to shift a peak position in a circumferential distribution of a magnetomotive force generated by the coils 4 wound around the n-th tooth 33 from the other slot 34 adjacent to the n-th tooth 33 toward one slot 34 adjacent to the n-th tooth 33. It is possible to shift a peak position from the other slot 34 adjacent to the (n+k)th tooth 33 toward one slot 34 adjacent to the (n+k)th tooth 33 in a circumferential distribution of a magnetomotive force generated by the coils 4 wound around the (n+k)th tooth 33. This makes it possible to achieve a desired circumferential distribution of a magnetomotive force.

[10] In the motor of [9], the slots 34 include an inner slot 62 that is a slot 34 between the n-th tooth 33 and the (n+k)th tooth 33, a first outer slot 61 that is a slot 34 opposite to the inner slot 62 with respect to the n-th tooth 33, and a second outer slot 63 that is a slot 34 opposite to the inner slot 62 with respect to the (n+k)th tooth 33, in the n-th coil 4, the number of windings passing through the first outer slot 61 is larger than the number of windings passing through the inner slot 62, and in the (n+k)th coil 4, the number of windings passing through the second outer slot 63 is larger than the number of windings passing through the inner slot 62.

This configuration makes it possible to shift a peak position in a circumferential distribution of a magnetomotive force generated by the coils 4 wound around the n-th tooth 33 from the inner slot 62 toward the first outer slot 61. It is possible to shift a peak position in a circumferential distribution of a magnetomotive force generated by the coils 4 wound around the (n+k)th tooth 33 from the inner slot 62 toward the second outer slot 63. As a result, occurrence of a steep peak of a magnetomotive force in the inner slot 62 and the vicinity thereof can be suppressed.

[11] In the motor of [9] or [10], the slots 34 include an inner slot 62 that is a slot 34 between the n-th tooth 33 and the (n+k)th tooth 33, a first outer slot 61 that is a slot 34 opposite to the inner slot 62 with respect to the n-th tooth 33, and a second outer slot 63 that is a slot 34 opposite to the inner slot 62 with respect to the (n+k)th tooth 33, in the n-th coil 4, the number of windings passing through the first outer slot 61 is smaller than the number of windings passing through the inner slot 62, and in the (n+k)th coil 4, the number of windings passing through the second outer slot 61 is smaller than the number of windings passing through the inner slot 62.

This configuration makes it possible to shift a peak position in a circumferential distribution of a magnetomotive force generated by the coils 4 wound around the n-th tooth 33 from the first outer slot 61 toward the inner slot 62. It is possible to shift a peak position in a circumferential distribution of a magnetomotive force generated by the coils 4 wound around the (n+k)th tooth 33 from the second outer slot 63 toward the inner slot 62. As a result, it is possible to obtain the stator core 31 with a large peak near the inner slot 62 and the vicinity thereof in a circumferential distribution of a magnetomotive force.

[12] In the motor of any one of [9] to [11], the slots 34 include an inner slot 62 that is a slot 34 between the n-th tooth 33 and the (n+k)th tooth 33, a first outer slot 61 that is a slot 34 opposite to the inner slot 62 with respect to the n-th tooth 33, and a second outer slot 63 that is a slot 34 opposite to the inner slot 62 with respect to the (n+k)th tooth 33, in the n-th coil 4, the number of windings passing through the first outer slot 63 is larger than the number of windings passing through the inner slot 62, and in the (n+k)th coil 4, the number of windings passing through the second outer slot 63 is smaller than the number of windings passing through the inner slot 62.

This configuration makes it possible to shift a peak position in a circumferential distribution of a magnetomotive force generated by the coils 4 wound around the n-th tooth from the inner slot 62 toward the first outer slot 61. It is possible to shift a peak position in a circumferential distribution of a magnetomotive force generated by the coils 4 wound around the (n+k)th tooth 33 from the second outer slot 63 toward the inner slot 62. As a result, it is possible to obtain the stator core 31 in which the magnetomotive force increases in the order of the second outer slot 63, the first outer slot 61, and the inner slot 62, for example, in a circumferential distribution of the magnetomotive force.

[13] In the motor of any one of [9] to [12], the slots 34 include a first slot 38 through which a relatively large number of windings pass, and a second slot 39 through which a relatively small number of windings pass, and in a cross section orthogonal to the rotation axis X, a cross-sectional area of the first slot 38 is larger than a cross-sectional area of the second slot 39.

With this configuration, the cross-sectional area of the slots 34 can be changed in accordance with the density of windings in each slot 34, and thus, the cross-sectional area of the stator core 31 can be increased. As a result, performance of the motor can be enhanced.

## Claims

1. A motor comprising:
a stator core including teeth and slots alternately arranged in a circumferential direction about a predetermined rotation axis; and
coils wound around the teeth, wherein
the teeth include a first tooth group including a first tooth through a k-th tooth (where k is an even integer),
the coils include a first coil group including first coils through k-th coils,
the first coils through the k-th coils are in the same phase,
n-th coils (where n = 1 to k) are wound around an n-th tooth,
in each of the n-th coils, the number of windings passing through one slot adjacent to the n-th tooth is larger than the number of windings passing through another slot adjacent to the n-th tooth, and
coils included in the first coils through the k-th coils are connected one by one in series via a crossover wire to repeatedly turn in ascending order from the first.

2. The motor according to claim 1, wherein,
the crossover wire includes a first crossover wire and a second crossover wire, the first crossover wire being located on a side of a first end surface in both end surfaces of the stator core in a direction along the rotation axis, the second crossover wire being located on a side of a second end surface in the both end surfaces of the stator core,
a first end in both ends of each of the n-th coils is located on a side of the first end surface,
a second end in the both ends of each of the n-th coils is located on a side of the second end surface,
the first crossover wire connects the first end of an odd-numbered coil to the first end of an even-numbered coil among the first coils through the k-th coils, and
the second crossover wire connects the second end of an even-numbered coil to the second end of an odd-numbered coil among the first coils through the k-th coils.

3. The motor according to claim 2, wherein,
the first end of each of the n-th coils is connected to one of windings passing through the one slot, and
the second end of each of the n-th coils is connected to another of the windings passing through the one slot.

4. The motor according to any one of claims 1 to 3, wherein
the teeth further include a second tooth group including a (k+1)th tooth through a (2k)th tooth,
the coils further include a second coil group including (k+1)th coils through (2k)th coils, the second coil group being in the same phase as the first coil group,
(n+k)th coils are wound around an (n+k)th tooth,
the n-th tooth and the (n+k)th tooth are adjacent to each other,
in each of the (n+k)th coils, the number of windings passing through one slot adjacent to the (n+k)th tooth is larger than the number of windings passing through another slot adjacent to the (n+k)th tooth, and
coils included in the (k+1)th coils through the (2k)th coils are connected one by one in series via a crossover wire to repeatedly turn in ascending order from the (k+1)th.

5. The motor according to claim 4, wherein,
the slots include an inner slot that is a slot between the n-th tooth and the (n+k)th tooth, a first outer slot that is a slot opposite to the inner slot with respect to the n-th tooth, and a second outer slot that is a slot opposite to the inner slot with respect to the (n+k)th tooth,
in each of the n-th coils wound around the n-th tooth, the number of windings passing through the first outer slot is larger than the number of windings passing through the inner slot, and
in each of the (n+k)th coils wound around the (n+k)th tooth, the number of windings passing through the second outer slot is larger than the number of windings passing through the inner slot.

6. The motor according to claim 4, wherein,
the slots include an inner slot that is a slot between the n-th tooth and the (n+k)th tooth, a first outer slot that is a slot opposite to the inner slot with respect to the n-th tooth, and a second outer slot that is a slot opposite to the inner slot with respect to the (n+k)th tooth,
in each of the n-th coils wound around the n-th tooth, the number of windings passing through the first outer slot is smaller than the number of windings passing through the inner slot, and
in each of the (n+k)th coils wound around the (n+k)th tooth, the number of windings passing through the second outer slot is smaller than the number of windings passing through the inner slot.

7. The motor according to claim 4, wherein,
the slots include an inner slot that is a slot between the n-th tooth and the (n+k)th tooth, a first outer slot that is a slot opposite to the inner slot with respect to the n-th tooth, and a second outer slot that is a slot opposite to the inner slot with respect to the (n+k)th tooth,
in each of the n-th coils wound around the n-th tooth, the number of windings passing through the first outer slot is larger than the number of windings passing through the inner slot, and
in each of the (n+k)th coils wound around the (n+k)th tooth, the number of windings passing through the second outer slot is smaller than the number of windings passing through the inner slot.

8. The motor according to any one of claims 1 to 3, wherein
the slots include a first slot through which a relatively large number of windings pass, and a second slot through which a relatively small number of windings pass, and
in a cross section orthogonal to the rotation axis, a cross-sectional area of the first slot is larger than a cross-sectional area of the second slot.

9. A motor comprising:
a stator core including teeth and slots alternately arranged in a circumferential direction about a predetermined rotation axis; and
coils wound around the teeth, wherein
the teeth include a first tooth group including a first tooth through a k-th tooth (where k is an even integer), and a second tooth group including a (k+1)th tooth through a (2k)th tooth,
an n-th tooth (where n is 1 to k) and an (n+k)th tooth are adjacent to each other,
the coils include a first coil group including a first coil through a k-th coil, and a second coil group including a (k+1)th coil through a (2k)th coil,
the first coil group and the second coil group are in the same phase,
an n-th coil is wound around the n-th tooth,
an (n+k)th coil is wound around the (n+k)th tooth,
in the n-th coil wound around the n-th tooth, the number of windings passing through one slot adjacent to the n-th tooth is larger than the number of windings passing through another slot adjacent to the n-th tooth, and
in an (n+k)th coil wound around the (n+k)th tooth, the number of windings passing through one slot adjacent to the (n+k)th tooth is larger than the number of windings passing through another slot adjacent to the (n+k)th tooth.

10. The motor according to claim 9, wherein,
the slots include an inner slot that is a slot between the n-th tooth and the (n+k)th tooth, a first outer slot that is a slot opposite to the inner slot with respect to the n-th tooth, and a second outer slot that is a slot opposite to the inner slot with respect to the (n+k)th tooth,
in the n-th coil, the number of windings passing through the first outer slot is larger than the number of windings passing through the inner slot, and
in the (n+k)th coil, the number of windings passing through the second outer slot is larger than the number of windings passing through the inner slot.

11. The motor according to claim 9, wherein,
the slots include an inner slot that is a slot between the n-th tooth and the (n+k)th tooth, a first outer slot that is a slot opposite to the inner slot with respect to the n-th tooth, and a second outer slot that is a slot opposite to the inner slot with respect to the (n+k)th tooth,
in the n-th coil, the number of windings passing through the first outer slot is smaller than the number of windings passing through the inner slot, and
in the (n+k)th coil, the number of windings passing through the second outer slot is smaller than the number of windings passing through the inner slot.

12. The motor according to claim 9, wherein,
the slots include an inner slot that is a slot between the n-th tooth and the (n+k)th tooth, a first outer slot that is a slot opposite to the inner slot with respect to the n-th tooth, and a second outer slot that is a slot opposite to the inner slot with respect to the (n+k)th tooth,
in the n-th coil, the number of windings passing through the first outer slot is larger than the number of windings passing through the inner slot, and
in the (n+k)th coil, the number of windings passing through the second outer slot is smaller than the number of windings passing through the inner slot.

13. The motor according to any one of claims 9 to 12, wherein
the slots include a first slot through which a relatively large number of windings pass, and a second slot through which a relatively small number of windings pass, and
in a cross section orthogonal to the rotation axis, a cross-sectional area of the first slot is larger than a cross-sectional area of the second slot.
